# EUROPÄISCHE PATENTSCHRIFT

(11) **EP 3 777 521 B1**
(45) Veröffentlichungstag und Bekanntmachung des Hinweises auf die Patenterteilung: **14.05.2025**
(21) Anmeldenummer: 20190646.8
(22) Anmeldetag: 12.08.2020
(51) Int. Cl.: A01G 9/24, A01G 13/02, F24S 25/12, F24S 25/16, H02S 20/10

(54) **SCHUTZVORRICHTUNG**
PROTECTION DEVICE
DISPOSITIF DE PROTECTION

(30) Priorität: 13.08.2019 DE 102019121832
(43) Veröffentlichungstag der Anmeldung: 17.02.2021
(73) Patentinhaber: Zimmermann, Robert, 88436 Eberhardzell (DE)
(72) Erfinder: Zimmermann, Robert, 88436 Eberhardzell (DE)
(74) Vertreter: Daub, Thomas

(56) Entgegenhaltungen:
- WO-A1-2011/047828
- WO-A1-2018/122275
- WO-A2-2013/056285
- CN-A- 108 966 939
- DE-A1- 10 153 703
- DE-A1- 102012 016 807
- DE-U1- 202005 012 798
- FR-A1- 3 017 196
- KR-A- 20140 125 026
- KR-B1- 101 057 573
- US-A1- 2008 148 631
- US-A1- 2013 032 186
- US-A1- 2016 073 591
- US-A1- 2017 126 172

## Beschreibung

### Stand der Technik

Es ist bereits eine Schutzvorrichtung, insbesondere Pflanzenschutzvorrichtung, zu einem Schutz von zumindest einer Kulturpflanze, mit einer Schutzeinheit, die zumindest ein Schutzelement zu einem Schutz der zumindest einen Kulturpflanze vor zumindest einer Witterungsbedingung und/oder einem Schädlingsbefall aufweist, und mit einer Trägerstruktur zu einer Abstützung des zumindest einen Schutzelements vorgeschlagen worden. Die Druckschrift DE 10 2012 016807 A1 offenbart einen PV-Generator auf Bodenstützelementen, die eine Schutzeinheit, welche Schutzelemente aufweist, und eine Trägerstruktur zu einer Abstützung der Schutzelemente umfasst. Die Schutzelemente sind jeweils zumindest teilweise als ein Solarelement zu einer Energieumwandlung ausgebildet. Die Trägerstruktur weist zwei Abstützebenen auf, die zueinander verkippt angeordnet sind und jeweils zu einer Abstützung von zumindest einem Solarelement vorgesehen sind. Zumindest zwei der als Solarelement ausgebildeten Schutzelemente sind jeweils auf zueinander verkippten Abstützebenen angeordnet.

### Vorteile der Erfindung

Die Erfindung geht aus von einer Schutzvorrichtung, insbesondere Pflanzenschutzvorrichtung, nach Anspruch 1.

Es wird vorgeschlagen, dass das zumindest eine Schutzelement als ein Solarelement zu einer Energieumwandlung ausgebildet ist.

Insbesondere ist die zumindest eine Kulturpflanze von einer kultivierten Nutzpflanze ausgebildet. Vorzugsweise ist die zumindest eine Kulturpflanze eine zielgerichtet als Nutzpflanze angebaute, kultivierte und/oder gezüchtete Pflanze. Bevorzugt ist die zumindest eine Kulturpflanze dazu vorgesehen, zumindest teilweise abgeschattet, insbesondere in einem Halbschatten, zu wachsen. Insbesondere ist die zumindest eine Kulturpflanze von einer Waldfrucht und/oder einem Gemüse, vorzugsweise einem Halbschattengemüse, gebildet.

Vorzugsweise ist die Waldfrucht als Brombeere, als Hagebutte, als Himbeere, als Holunderbeere, als Preiselbeere, als Sanddorn, als Schlehe, als Wacholderbeere, als Weißdorn und/oder eine andere einem Fachmann bekannte Frucht, die dazu vorgesehen ist, zumindest teilweise abgeschattet aufzuwachsen. Bevorzugt ist das Halbschattengemüse als Weißkohl, als Mangold, als Rote Bete, als Kohlrabi, als Radieschen, als Salat, als Feldsalat, als Spinat, als Buschbohnen, als Rübstiel, als Grünkohl, als Asia-Salate, als Broccoli, als Blumenkohl, als Ruccola, als Erbsen, als Lauch, als Zwiebeln, als Möhren, als Pastinaken, als Rettich, als Rosenkohl, als Knoblauch und/oder ein anderes einem Fachmann bekanntes Halbschattengemüse ausgebildet. Vorteilhaft kann die Nutzpflanze auch von einer Weinrebe und die zu schützenden Früchte können von Weintrauben gebildet sein.

Vorzugsweise ist unter einer "Witterungsbedingung" eine Sonnenstrahlung, ein Niederschlag, eine Windgeschwindigkeit, eine Lufttemperatur und/oder eine Luftfeuchtigkeit zu verstehen. Bevorzugt weist der Niederschlag Regen, Hagel und/oder Schnee auf. Vorzugsweise ist die Schutzvorrichtung dazu vorgesehen, die zumindest eine Kulturpflanze vor fliegenden Schädlingen, insbesondere in Schwärmen auftretenden Schädlingen, zu schützen.

Insbesondere ist das zumindest eine Solarelement dazu vorgesehen, eine elektromagnetische Strahlung, insbesondere eine Sonnenstrahlenenergie, in eine thermische und/oder elektrische Energie umzuwandeln. Vorzugsweise ist das Solarelement als ein Photovoltaikmodul ausgebildet. Das zumindest eine Solarelement ist vorzugsweise dazu vorgesehen, auf der Trägerstruktur montiert zu werden.

Erfindungsgemäß wird vorgeschlagen, dass die Trägerstruktur zumindest zwei Abstützebenen aufweist, die zueinander verkippt angeordnet sind und jeweils zu einer Abstützung von zumindest einem Solarelement vorgesehen sind.

Insbesondere weist die Trägerstruktur zumindest zwei Sparrenelemente auf. Die Trägerstruktur weist vorzugsweise zumindest ein Sparrenelement und zumindest ein weiteres Sparrenelement auf. Das zumindest eine Sparrenelement und das zumindest eine weitere Sparrenelement sind in einem montierten Zustand bevorzugt verkippt zueinander angeordnet zu werden. Alternativ zu einem Sparrenelement sind auch andere dem Fachmann als sinnvoll erscheinende Trägerelemente denkbar, wie insbesondere Plattenelemente. Des Weiteren weist die Trägerstruktur zumindest zwei Stützelemente auf. Die zumindest zwei Stützelemente sind dazu vorgesehen, jeweils zumindest eines der zumindest zwei Sparrenelemente auf einer Aufständerfläche, vorzugsweise Erdboden abzustützen. Bevorzugt bilden die zumindest zwei Sparrenelemente und die zumindest zwei Stützelemente eine Stützstruktur. Die Trägerstruktur weist insbesondere zumindest zwei Stützstrukturen, vorzugsweise zumindest eine Stützstruktur und zumindest eine weitere Stützstruktur, auf. Die zumindest zwei Stützstrukturen spannen insbesondere in einem montierten Zustand der Trägerstruktur vorzugsweise die zumindest zwei zueinander verkippten Abstützebenen auf. Zumindest ein Sparrenelement zumindest einer Stützstruktur und zumindest ein Sparrenelement zumindest einer weiteren Stützstruktur sind in dem montierten Zustand der Trägerstruktur zumindest im Wesentlichen parallel zueinander ausgerichtet. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Zumindest ein weiteres Sparrenelement der zumindest einen Stützstruktur und zumindest ein weiteres Sparrenelement der zumindest einen weiteren Stützstruktur sind vorzugsweise in dem montierten Zustand der Trägerstruktur insbesondere zumindest im Wesentlichen parallel zueinander ausgerichtet. Die Trägerstruktur weist vorzugsweise zumindest zwei Trägerelemente auf. Des Weiteren weist die Trägerstruktur vorzugsweise zumindest ein Trägerelement und zumindest ein weiteres Trägerelement auf, die dazu vorgesehen sind, eine Gewichtskraft von dem zumindest einen Solarelement an ein weiteres Bauteil der Trägerstruktur weiterzuleiten. Das zumindest eine Trägerelement ist bevorzugt dazu vorgesehen, mit dem zumindest einen Sparrenelement der zumindest einen Stützstruktur und mit dem zumindest einen Sparrenelement der zumindest einen weiteren Stützstruktur verbunden zu werden. Vorzugsweise verläuft eine Haupterstreckungsachse des zumindest einen Trägerelements zumindest im Wesentlichen parallel zu einer Schnittlinie der zumindest einen Abstützebene mit der zumindest einen weiteren Abstützebene. Unter einer "Haupterstreckungsachse" eines Objekts soll dabei insbesondere eine Achse verstanden werden, welche parallel zu einer längsten Kante eines kleinsten geometrischen Quaders verläuft, welcher das Objekt gerade noch vollständig umschließt. Bevorzugt verläuft eine Haupterstreckungsachse des zumindest einen weiteren Trägerelements zumindest im Wesentlichen parallel zu zumindest einer Firstlinie der Trägerstruktur. Besonders bevorzugt verläuft die Haupterstreckungsachse des zumindest einen Trägerelements zumindest im Wesentlichen parallel zu der zumindest einen Abstützebene. Vorzugsweise verläuft das zumindest eine weitere Trägerelement zumindest im Wesentlichen parallel zu einer Schnittlinie der zumindest einen Abstützebene mit der zumindest einen weiteren Abstützebene. Bevorzugt verläuft das zumindest eine weitere Trägerelement zumindest im Wesentlichen parallel zu der zumindest einen Firstlinie der Trägerstruktur. Besonders bevorzugt verläuft die Haupterstreckungsachse des zumindest einen weiteren Trägerelements zumindest im Wesentlichen parallel zu der zumindest einen Abstützebene. Des Weiteren weist die Trägerstruktur zumindest zwei Windverbandelemente auf, die dazu vorgesehen sind, zumindest zwei Stützstrukturen in einem Diagonalverband, einem Zick-Zackverband oder in einem Kreuzverband zu verbinden, d.h. insbesondere zumindest zwei zumindest im Wesentlichen senkrecht zu einer Aufständerfläche und parallel zueinander ausgerichtete Stützelemente in einer diagonal verlaufenden Richtung zu verbinden. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Insbesondere sind die zumindest zwei Windverbandelemente dazu vorgesehen, die zumindest zwei Stützstrukturen zueinander zu stabilisieren. Insbesondere sind die Windverbandelemente dazu vorgesehen, ein relatives Verwinden der beiden Stützstrukturen zueinander zumindest zu reduzieren.

Insbesondere weist die Trägerstruktur eine satteldachförmige Struktur auf. Alternativ ist auch denkbar, dass die Trägerstruktur als eine andere, dem Fachmann bekannte Dachstruktur wie eine Pultdachstruktur oder eine Bogendachstruktur oder dergleichen ausgebildet sein kann. Durch die erfindungsgemäße Ausgestaltung kann eine vorteilhaft stabile Schutzvorrichtung bereitgestellt werden. Es kann eine vorteilhaft kostenarme Bauausführung, insbesondere bei einer einfachen Konstruktion und einer hohen Witterungsbeständigkeit erreicht werden. Es kann des Weiteren ein umbauter Raum vorteilhaft effizient genutzt werden.

Erfindungsgemäß wird vorgeschlagen, dass die zumindest zwei als Solarelement ausgebildeten Schutzelemente jeweils auf zueinander verkippten Abstützebenen angeordnet sind. Insbesondere sind die zumindest zwei Trägerelemente jeweils dazu vorgesehen, zumindest eines der zumindest zwei Solarelemente, vorzugsweise zumindest im Wesentlichen parallel zu einer Abstützebene, aufzunehmen. Vorzugsweise ist das zumindest eine Trägerelement dazu vorgesehen, zumindest ein Solarelement parallel zu der zumindest einen Abstützebene aufzunehmen. Des Weiteren ist das zumindest eine weitere Trägerelement dazu vorgesehen, zumindest ein weiteres Solarelement zumindest im Wesentlichen parallel zu der zumindest einen weiteren Abstützebene aufzunehmen. Insbesondere verläuft eine Flächennormale des zumindest einen Solarelements, welches vorzugsweise auf der zumindest einen Abstützebene angeordnet ist, quer zu einer Flächennormalen des zumindest einen weiteren Solarelements, welches vorzugsweise auf der zumindest einen weiteren

Abstützebene angeordnet ist. Unter "quer" soll hier insbesondere eine Ausrichtung einer Richtung und/oder einer Achse relativ zu einer Bezugsrichtung und/oder einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist. Vorzugsweise ist die Flächennormale des zumindest einen Solarelements in einem montierten Zustand des zumindest einen Solarelements zumindest im Wesentlichen parallel zu einer Flächennormalen der zumindest einen Abstützebene ausgerichtet. Bevorzugt ist die Flächennormale des zumindest einen weiteren Solarelements in einem montierten Zustand des zumindest einen Solarelements zumindest im Wesentlichen parallel zu einer Flächennormalen der zumindest einen Abstützebene ausgerichtet. Durch die erfindungsgemäße Ausgestaltung der Schutzvorrichtung kann eine Ausrichtung der Solarelemente vorteilhaft in einer Ost-West-Richtung erreicht werden. Es kann ein vorteilhaft hoher gesamtwirtschaftlicher Ertrag erzielt werden. Ferner kann eine potentielle Schneelast reduziert werden.

Erfindungsgemäß wird vorgeschlagen, dass die zumindest zwei Solarelemente eine Luftzirkulationsöffnung begrenzen. Insbesondere sind die zumindest zwei Solarelemente in einer Ebene senkrecht zu der zumindest einen Firstlinie der Trägerstruktur mit einem Abstand voneinander angeordnet. Vorzugsweise ist der kleinste Abstand zwischen den zumindest zwei Solarelementen als Luftzirkulationsöffnung ausgebildet. Die Luftzirkulationsöffnung ist erfindungsgemäß von einer Lücke zwischen den zumindest zwei Solarelementen entlang einer Achse senkrecht zu einer Hochachse gebildet. Bevorzugt verläuft die Hochachse zumindest im Wesentlichen senkrecht zu der Firstlinie und/oder der Längsachse der Schutzvorrichtung. Insbesondere verläuft die Hochachse zumindest im Wesentlichen parallel zu zumindest einem der zumindest zwei Stützelemente. Besonders bevorzugt verläuft die Hochachse zumindest im Wesentlichen senkrecht zu der Aufständerfläche. Ein kleinster Abstand zwischen den zumindest zwei Solarelementen, bemessen entlang der Achse senkrecht zu der Hochachse der Schutzvorrichtung, ist insbesondere größer als 20 cm, vorzugsweise größer als 40 cm, bevorzugt größer als 60 cm und besonders bevorzugt größer als 80 cm. Des Weiteren ist der kleinste die Luftzirkulationsöffnung bildende Abstand insbesondere kleiner als 150 cm, vorzugsweise kleiner als 130 cm, bevorzugt kleiner als 110 cm und besonders bevorzugt kleiner als 90 cm. Durch die erfindungsgemäße Ausgestaltung der Schutzvorrichtung kann ein Hitzestau vorteilhaft vermieden werden. Es kann besonders vorteilhaft eine Kaminwirkung bereitgestellt werden. Es kann des Weiteren eine vorteilhaft effiziente und/oder energiesparende Luftbewegung bereitgestellt werden.

Erfindungsgemäß wird ferner vorgeschlagen, dass an der Luftzirkulationsöffnung zumindest ein weiteres Schutzelement angeordnet ist. Insbesondere ist das zumindest eine weitere Schutzelement als ein biegeweiches Element ausgebildet. Vorzugsweise ist das zumindest eine weitere Schutzelement als eine Folie, als ein Tuch und/oder als ein Netz ausgebildet. Bevorzugt ist das zumindest einen weitere Schutzelement in einem Funktionszustand unterhalb oder oberhalb der Luftzirkulationsöffnung ausgebildet. Besonders bevorzugt ist das zumindest eine weitere Schutzelement in dem Funktionszustand beabstandet zu der Trägerstruktur und/oder den zumindest zwei Solarelementen angeordnet. Vorzugsweise weist das zumindest eine weitere Schutzelement in dem Funktionszustand einen kleinsten Abstand, insbesondere bemessen entlang einer Achse parallel zu der Hochachse der Schutzvorrichtung, zu jeweils zumindest einem der zumindest zwei Solarelemente auf, der größer ist als insbesondere 7 cm, vorzugsweise 10 cm, bevorzugt 15 cm und besonders bevorzugt 20 cm.

Insbesondere ist das zumindest eine weitere Schutzelement in dem Funktionszustand breiter als die Luftzirkulationsöffnung ausgebildet. Vorzugsweise weist das zumindest eine weitere Schutzelement in dem Funktionszustand eine maximale Erstreckung entlang der Achse senkrecht zu der Hochachse auf, die insbesondere um zumindest 20 % größer, vorzugsweise um zumindest 30 % größer und bevorzugt um zumindest 50 % größer ist als die maximale Erstreckung der Luftzirkulationsöffnung in dem Funktionszustand der zumindest zwei Solarelemente. Durch die erfindungsgemäße Ausgestaltung kann ein Schutz gegen Witterungseinflüsse und/oder Schädlinge unter Beibehaltung der Luftzirkulationsöffnung erreicht werden. Es können vorteilhaft Schutzwirkungen kombiniert werden.

Ferner wird vorgeschlagen, dass das zumindest eine weitere Schutzelement in einem, insbesondere dem bereits zuvor genannten, Funktionszustand eine Verbindung mit der Trägerstruktur aufweist. Insbesondere ist das zumindest eine weitere Schutzelement zerstörungsfrei lösbar mit der Trägerstruktur verbunden. Vorzugsweise ist das zumindest eine weitere Schutzelement werkzeuglos lösbar und/oder verbindbar mit der Trägerstruktur verbunden. Bevorzugt ist das zumindest eine weitere Schutzelement mit einer Hakenverbindung oder einer Klemmverbindung mit der Trägerstruktur verbunden. Insbesondere weist die Trägerstruktur einen Verbindungsmittelaufnahmebereich auf. Der Verbindungsmittelaufnahmebereich ist bevorzugt dazu vorgesehen, ein Verbindungsmittel zu einer Verbindung des zumindest einen weiteren Schutzelements mit der Trägerstruktur aufzunehmen. Durch die erfindungsgemäße Ausgestaltung der Schutzvorrichtung kann eine leichte Nachrüstbarkeit des zumindest einen weiteren Schutzelements erreicht werden. Es kann ein vorteilhaft witterungsabhängig einsetzbares weiteres Schutzelement bereitgestellt werden. Es kann des Weiteren eine durch die Luftzirkulationsöffnung eintreffende Lichtintensität durch eine Variation das weiteren Schutzelements vorteilhaft variiert werden.

Des Weiteren wird vorgeschlagen, dass zumindest ein weiteres Schutzelement als ein Netz ausgebildet ist. Insbesondere ist das zumindest eine weitere Schutzelement als Fliegennetz und/oder Moskitonetz ausgebildet. Insbesondere weist das Netz eine Maschenweite von insbesondere kleiner als 10 mm, vorzugsweise kleiner als 5 mm auf, vorzugsweise kleiner als 0,8 mm, und insbesondere größer als 0,5 mm auf. Das Netz weist vorzugsweise eine Lichtdurchlässigkeit von insbesondere zumindest 20 %, vorzugsweise zumindest 30 %, bevorzugt zumindest 50 % und besonders bevorzugt von zumindest 75 % relativ zu einer Lichtintensität auf einer Oberfläche des zumindest einen zusätzlichen Schutzelements auf. Durch die erfindungsgemäße Ausgestaltung der Schutzvorrichtung kann ein besonders vorteilhaft effektiver Schutz gegen Schädlinge erreicht werden. Es kann besonders vorteilhaft ein Schutz vor einem Schädlingsschwarm, insbesondere Essigfliegenschwarm, bereitgestellt werden.

Ferner wird vorgeschlagen, dass die zumindest zwei Abstützebenen dazu vorgesehen sind, jeweils zumindest zwei Solarelemente zumindest im Wesentlichen parallel zu einer Querachse und/oder jeweils zumindest zwei Solarelemente zumindest im Wesentlichen parallel zu einer Längsachse der jeweiligen Abstützebene benachbart aufzunehmen. Vorzugsweise verläuft eine Querachse der zumindest einen Abstützebene zumindest im Wesentlichen parallel zu einer Haupterstreckungsachse des zumindest einen Sparrenelements. Bevorzugt verläuft eine Querachse der zumindest einen weiteren Abstützebene zumindest im Wesentlichen parallel zu einer Haupterstreckungsachse des zumindest einen weiteren Sparrenelements. Vorzugsweise verläuft die Längsachse der zumindest zwei Abstützebenen parallel zu der Firstlinie der Trägerstruktur. Bevorzugt verläuft die Längsachse der zumindest zwei Abstützebenen zumindest im Wesentlichen senkrecht zu zumindest einer der zumindest zwei der Querachsen und zumindest im Wesentlichen parallel zu zumindest einer der zumindest zwei Abstützebenen. Besonders bevorzugt bildet die Längsachse der zumindest zwei Abstützebenen eine Längsachse der Trägerstruktur. Insbesondere sind zumindest zwei parallel zu der Längsachse aufgenommene Solarelemente zumindest im Wesentlichen abstandsfrei nebeneinander angeordnet. Vorzugsweise weisen die zumindest zwei parallel zu der Längsachse aufgenommenen Solarelemente einen kleinsten Abstand zueinander von insbesondere höchstens 10 cm, vorzugsweise höchstens 8 cm, bevorzugt höchstens 6 cm, besonders bevorzugt höchstens 4 cm und vorteilhaft höchstens 2 cm auf. Bevorzugt weisen die zumindest zwei zumindest im Wesentlichen parallel zu einer der zumindest zwei Querachsen aufgenommenen Solarelemente einen kleinsten Abstand von insbesondere zumindest 30 cm, bevorzugt zumindest 40 cm, besonders bevorzugt zumindest 50 cm und besonders bevorzugt zumindest 60 cm zueinander auf. Vorzugsweise sind die zumindest zwei Solarelemente zumindest im Wesentlichen parallel zu der Längsachse und/oder Querachse auf einer gemeinsamen Linie, die zumindest im Wesentlichen parallel zu der Längsachse und/oder Querachse verläuft, angeordnet. Insbesondere begrenzen zumindest zwei entlang einer Achse parallel zu einer der zumindest zwei Querachsen benachbart angeordnete Solarelemente eine Luftzirkulationsöffnung zumindest teilweise. Durch die erfindungsgemäße Ausgestaltung kann ein bauraumeffizienter und/oder materialsparender Einsatz der Schutzvorrichtung erreicht werden. Es können vorteilhaft große Flächen kostengünstig geschützt werden. Es kann des Weiteren vorteilhaft einfach eine Anpassungsfähigkeit der Schutzvorrichtung an insbesondere eine Größe eines zu bepflanzenden Feldes und/oder einer Bodenbeschaffenheit erreicht werden.

Es wird des Weiteren vorgeschlagen, dass die Schutzvorrichtung zumindest acht Solarelemente umfasst. Vorzugsweise sind zumindest zwei der zumindest acht Solarelemente zumindest im Wesentlichen parallel zu der Längsachse auf der zumindest einen Abstützebene aufgenommen. Bevorzugt sind zumindest zwei weitere der zumindest acht Solarelemente zumindest im Wesentlichen parallel zu der zumindest einen Querachse der zumindest einen Abstützebene aufgenommen. Des Weiteren sind vorzugsweise zumindest zwei andere Solarelemente der zumindest acht Solarelemente zumindest im Wesentlichen parallel zu der Längsachse auf der zumindest einen weiteren Abstützebene aufgenommen. Vorzugsweise sind zumindest zwei andere weitere der zumindest acht Solarelemente zumindest im Wesentlichen parallel zu der zumindest einen weiteren Querachse der zumindest einen weiteren Abstützebene aufgenommen. Durch die erfindungsgemäße Ausgestaltung kann eine Schutzwirkung vorteilhaft in Abhängigkeit von äußeren Parametern, wie Pflanzabstand und/oder Wuchshöhe skaliert werden. Es können vorteilhaft große Flächen kostengünstig geschützt werden.

Es wird ferner vorgeschlagen, dass die Trägerstruktur in einem, insbesondere dem bereits zuvor genannten, montierten Zustand eine maximale Höhe von 4,5 m aufweist. Vorzugsweise weist die Trägerstruktur in dem montierten Zustand eine maximale Höhe über Grund von 4,5 m auf. Bevorzugt weist die Trägerstruktur in dem montierten Zustand eine Höhe von insbesondere höchstens 4 m, vorzugsweise höchstens 3,5 m, bevorzugt höchstens 3 m und besonders bevorzugt höchstens 2,5 m auf. Durch die erfindungsgemäße Ausgestaltung kann eine vorteilhaft hohe Schutzwirkung bereitgestellt werden. Es kann vorteilhaft eine Unterfahrung der Schutzvorrichtung mit Arbeitsmaschinen erreicht werden. Besonders vorteilhaft kann ein Waldklima geschaffen werden. Es kann besonders vorteilhaft ein Halbschatten bereitgestellt werden, um einen großen Ernteertrag von Halbschattengewächsen wie Waldfrüchten und/oder Halbschattengemüse zu erreichen. Es kann ein großer Ernteertrag von Halbschattengewächsen mit vorteilhaft hoher elektrischer Energiegewinnung verknüpft und/oder optimiert werden. Durch die erfindungsgemäße Gesamthöhe kann eine vorteilhaft dunkle und/oder geschützte Umgebung für Halbschattengewächse erreicht werden und/oder es kann eine Bewirtschaftung mit Arbeitsmaschinen erreicht werden. Des Weiteren kann besonders vorteilhaft ein Schutz von Arbeitern, insbesondere für Pflücker bereitgestellt werden. Es kann vorteilhaft eine von einer Witterung weitestgehend unabhängige Arbeitsumgebung, insbesondere bei vorteilhafter Belüftung, geschaffen werden. Des Weiteren wird vorgeschlagen, dass die Trägerstruktur eine Stützbreite minimal 1,4 m bis maximal 9 m aufweist. Insbesondere ist die Stützbreite ein kleinster Abstand zwischen den zumindest zwei Stützelementen einer Stützstruktur. Vorzugsweise weisen die zumindest zwei Stützelemente in dem montierten Zustand der Stützstruktur und/oder der Trägerstruktur einen kleinsten Abstand aus einem Wertebereich von 1,4 m bis 9 m auf. Durch die erfindungsgemäße Ausgestaltung kann vorteilhaft eine Vielzahl an Pflanzreihen mit einer Trägerstruktur geschützt werden. Es kann eine Pflege und/oder Ernte vorteilhaft maschinell ausgeführt werden. Es bedarf einer besonders vorteilhaft geringen manuellen Pflege- und/oder Erntearbeit. Des Weiteren kann eine besonders vorteilhaft hohe Landausnutzung durch eine Kombination von Nutzpflanzen und elektrischer Energiegewinnung erreicht werden. Es können Anbauflächen mit zweifachem Nutzen bereitgestellt werden. Eine Stützbreite größer als 2 m und insbesondere größer als 3 m und besonders bevorzugt größer als 4 m eignet sich insbesondere für einen Schutz von mehreren Reihen an Pflanzen, indem sich die Stützbreite über mehrere Reihen erstreckt. Besonders vorteilhaft können mit einer entsprechenden Schutzvorrichtung Weinreben und Weintrauben geschützt werden.

Es wird des Weiteren vorgeschlagen, dass die Abstützebenen in einem montierten Zustand einen relativen Kippwinkel zueinander in einem Wertebereich von 144 ° bis 164 ° aufweisen. Vorzugsweise weisen die zumindest zwei Sparrenelemente in dem montierten Zustand der zumindest einen Stützstruktur einen Dachneigungswinkel aus einem Wertebereich von 8 ° bis 18 ° auf. Durch die erfindungsgemäße Ausgestaltung der Schutzvorrichtung kann eine vorteilhaft hohe Schutzwirkung erreicht werden. Es kann eine vorteilhaft kleine Windangriffsfläche bereitgestellt werden. Des Weiteren kann eine vorteilhaft hohe Energieerzeugungseffizienz erreicht werden. Die Solarelemente können vorteilhaft über einen breiten Sonnenzenitwinkel elektrische Energie erzeugen.

Ferner wird vorgeschlagen, dass die Schutzvorrichtung eine Regenwassersammeleinheit aufweist. Insbesondere ist die Regenwassersammeleinheit vorzugsweise in dem montierten Zustand der Schutzvorrichtung zumindest teilweise in einem Traufbereich des zumindest einen Schutzelements angeordnet. Bevorzugt weist die Regenwassersammeleinheit zumindest ein als Regenrinne ausgebildetes Regenwassersammelelement auf. Die Regenwassersammeleinheit ist insbesondere dazu vorgesehen, ein von dem zumindest einen Schutzelement aufgefangenes Regenwasser aufzunehmen und einem Regenwassersammelbehälter zuzuführen. Des Weiteren weist die Regenwassersammeleinheit vorzugsweise eine elektrisch betriebene Pumpe auf.

Die elektrisch betriebene Pumpe ist bevorzugt dazu vorgesehen, Regenwasser zu einer Bedarfsstelle, insbesondere zu zumindest einer Kulturpflanze, zu pumpen. Des Weiteren ist die elektrische Pumpe vorzugsweise dazu vorgesehen, mit einem von dem zumindest einen Solarelement der Schutzvorrichtung erzeugten elektrischen Strom betrieben zu werden. Durch die erfindungsgemäße Ausgestaltung kann eine vorteilhaft einfache und/oder effiziente Nutzung von Regenwasser erreicht werden. Es kann ein abgefangenes Regenwasser vorteilhaft kontrolliert einer Kulturpflanze zugeführt werden. Es kann eine kontinuierliche und/oder bedarfsgerechte Abgabe von Wasser an die zumindest eine Kulturpflanze erreicht werden.

Des Weiteren wird vorgeschlagen, dass die Schutzvorrichtung zumindest eine Bepflanzungseinheit umfasst, die dazu vorgesehen ist, die zumindest eine Kulturpflanze beabstandet von einem Untergrund anzuordnen und insbesondere an der Trägerstruktur angeordnet ist. Es kann ein Wachstum von Kulturpflanzen vorteilhaft unabhängig von einer Qualität des den Untergrund der Schutzvorrichtung bildenden Erdbodens erreicht werden. Dadurch können vorteilhaft neue Flächen für die Aufzucht und/oder den Anbau von Kulturpflanzen erschlossen werden, insbesondere vorteilhaft unabhängig von Umgebungsbedingungen wie Schatten und Bodenqualität. Eine Belastung des den Untergrund der Schutzvorrichtung bildenden Erdbodens durch einen zu einem Wachstum der Kulturpflanzen verwendeten Dünger oder ein Schädlingsbekämpfungsmittel o. dgl. kann vorteilhaft reduziert oder verhindert werden. Es kann eine vorteilhaft einfache und schnelle Ernte von Hand ermöglicht werden, insbesondere da über die Bepflanzungseinheit gehaltene Kulturpflanzen erhöht angeordnet werden können, wodurch eine Ernte während dem Stehen/Laufen ermöglicht werden kann. Vorzugsweise ist die Bepflanzungseinheit zumindest größtenteils, insbesondere zumindest im Wesentlichen vollständig, zwischen dem Untergrund und der Schutzeinheit angeordnet. Bevorzugt ist die Bepflanzungseinheit an der Trägerstruktur, insbesondere Stützelementen der Trägerstruktur, befestigt, beispielsweise über eine Schraubverbindung, eine Haltevorrichtung, insbesondere Haltefortsätze, eine Steckverbindung o. dgl. Bevorzugt erstreckt sich die Bepflanzungseinheit zumindest größtenteils, insbesondere zumindest im Wesentlichen vollständig, über eine maximale Längserstreckung der Trägerstruktur und/oder der Schutzeinheit. Besonders bevorzugt erstreckt sich die Bepflanzungseinheit, insbesondere eine Haupterstreckungsachse der Bepflanzungseinheit, zumindest im Wesentlichen parallel zu der Längsachse der Schutzvorrichtung. Insbesondere ist die Bepflanzungseinheit dazu vorgesehen, Pflanzenerde zu einer Kultivierung der zumindest einen Kulturpflanze zu halten. Vorzugsweise ist die Bepflanzungseinheit dazu vorgesehen, eine Vielzahl von Kulturpflanzen, die zu deren Kultivierung vorgesehene Pflanzenerde sowie zu deren Kultivierung verwendetes Wasser beabstandet vom Untergrund anzuordnen. Der Untergrund weist vorzugsweise die Aufständerfläche auf. Insbesondere ist die Schutzvorrichtung über die Trägerstruktur an dem Untergrund angeordnet, insbesondere auf dem Untergrund aufgestellt. Besonders bevorzugt ist die Trägerstruktur, insbesondere die Stützelemente der Trägerstruktur, an denen die Bepflanzungseinheit angeordnet ist, dazu vorgesehen, ein gesamtes Gewicht der Bepflanzungseinheit, der über die Bepflanzungseinheit gehaltenen Kulturpflanzen, die zu der Kultivierung der Kulturpflanzen vorgesehene Pflanzenerde und/oder zu der Kultivierung der Kulturpflanzen verwendetes Wasser zu tragen und/oder abzustützen.

Ferner wird vorgeschlagen, dass die Bepflanzungseinheit zumindest ein Bepflanzungselement, insbesondere einen Pflanzkasten, zur Aufnahme der zumindest einen Kulturpflanz umfasst, das beabstandet von dem Untergrund angeordnet ist. Es kann eine vorteilhaft große freiliegende Fläche des Untergrunds erreicht werden. Es kann eine vorteilhaft hohe Flächennutzungseffizienz ermöglicht werden, beispielsweise zu einem Kultivieren von anderen Pflanzen o. dgl. unterhalb der Schutzvorrichtung, insbesondere des Bepflanzungselements. Bevorzugt ist das zumindest eine Bepflanzungselement zu einer Aufnahme der in Reihenanordnung angeordneten Kulturpflanzen vorgesehen, wobei insbesondere die in dem zumindest einen Bepflanzungselement angeordneten Kulturpflanzen beabstandet von dem Untergrund angeordnet sind. Insbesondere ist das zumindest eine Bepflanzungselement an der Trägerstruktur, insbesondere an Stützelementen der Trägerstruktur, angeordnet, insbesondere befestigt, und beabstandet vom Untergrund angeordnet. Vorzugsweise umfasst die Bepflanzungsvorrichtung eine Mehrzahl von Bepflanzungselementen, die insbesondere in mehreren zueinander zumindest im Wesentlichen parallel ausgerichteten Reihen angeordnet sind.

Zudem wird vorgeschlagen, dass sich das zumindest eine Bepflanzungselement, insbesondere die Bepflanzungselemente der Bepflanzungseinheit jeweils, zumindest im Wesentlichen parallel zu einer Längserstreckung der Trägerstruktur und/oder der Schutzeinheit über einen Abstand von zumindest zwei, insbesondere drei, hintereinander angeordneten Stützelementen der Trägerstruktur erstreckt. Es kann eine vorteilhaft einfache Bewässerung, Düngung und/oder Behandlung von über die Bepflanzungseinheit gehaltenen Kulturpflanzen ermöglicht werden. Es kann eine vorteilhaft einfache Befestigung der Bepflanzungseinheit an Stützelementen der Trägerstruktur erreicht werden. Dadurch können vorteilhaft geringe Herstellungs- und Montagekosten ermöglicht werden, insbesondere da zusätzliche Haltemittel entfallen können. Insbesondere ist das zumindest eine Bepflanzungselement als ein rinnenförmiger Behälter ausgebildet. Insbesondere ist die Längserstreckung der Trägerstruktur und/oder der Schutzeinheit zumindest im Wesentlichen parallel zu der Längsachse der Trägerstruktur und/oder zu der Reihenanordnung, insbesondere den Reihen, der Kulturpflanzen angeordnet. Bevorzugt ist die Bepflanzungseinheit aus mehreren zumindest im Wesentlichen parallel zueinander angeordneten Reihen von Bepflanzungselementen ausgebildet. Es ist denkbar, dass sich das zumindest eine Bepflanzungselement zumindest größtenteils, insbesondere zumindest im Wesentlichen vollständig, über eine maximale Längserstreckung der Trägerstruktur und/oder der Schutzeinheit erstreckt. Insbesondere weisen/weist die/das Bepflanzungselement(e) eine maximale Längserstreckung, welche insbesondere zumindest im Wesentlichen parallel zu der Längserstreckung der Schutzeinheit und/oder der Trägerstruktur angeordnet ist, von mindestens 1,50 m, vorzugsweise mindestens 2 m und bevorzugt mindestens 3 m, auf. Es ist denkbar, dass die einzelnen Reihen jeweils zumindest zwei oder mehr zueinander koaxial angeordnete Bepflanzungselemente umfassen. Besonders bevorzugt ist das zumindest eine Bepflanzungselement dazu vorgesehen, Kulturpflanzen und zur Kultivierung der Kulturpflanzen vorgesehene Pflanzenerde aufzunehmen. Bevorzugt sind alle über die Bepflanzungseinheit gehaltenen Kulturpflanzen zumindest teilweise in den Bepflanzungselementen angeordnet und insbesondere von diesen gehalten. Die Bepflanzungselemente sind insbesondere jeweils zwischen zumindest zwei Stützelementen der Trägerstruktur angeordnet und vorzugsweise an den Stützelementen befestigt. In einer bevorzugten Ausgestaltung umschließt das zumindest eine Bepflanzungselement zumindest ein Stützelement der Trägerstruktur, an der das Bepflanzungselement angeordnet und/oder befestigt ist, in zumindest einer Horizontalen durch das Stützelement betrachtet zumindest größtenteils, insbesondere zumindest im Wesentlichen vollständig. Insbesondere erstreckt sich ein über das zumindest eine Bepflanzungselement begrenztes Volumen zur Aufnahme der zumindest einen Kulturpflanze und/oder von Pflanzenerde in zumindest einer Horizontalen durch das Stützelement betrachtet zumindest im Wesentlichen vollständig um das zumindest eine Stützelement. Beispielsweise begrenzt das Bepflanzungselement zumindest eine Durchführung, welche sich vollständig über eine maximale Höhe des Bepflanzungselements erstreckt und welche zur Aufnahme eines Stützelements der Trägerstruktur vorgesehen ist. Die Bepflanzungselemente und/oder die Reihen von Bepflanzungselementen, insbesondere Haupterstreckungsachsen der Bepflanzungselemente, sind vorzugsweise jeweils zumindest im Wesentlichen parallel zu einer Horizontalen, der Aufständerfläche und/oder dem Untergrund angeordnet. Die Bepflanzungselemente und/oder die Reihen von Bepflanzungselementen weisen vorzugweise einen einheitlichen minimalen Abstand zum Untergrund, insbesondere zur Aufständerfläche, auf.

Vorzugsweise beträgt der minimale Abstand der Bepflanzungselemente zum Untergrund, insbesondere zur Aufständerfläche, mindestens 5 cm, vorzugsweise mindestens 10 cm und bevorzugt mindestens 15 cm. Insbesondere ist jeweils höchstens ein, insbesondere genau ein, Bepflanzungselement an einem Stützelement der Trägerstruktur angeordnet. Alternativ oder zusätzlich ist denkbar, dass die Bepflanzungseinheit mehr als eine Ebene von Bepflanzungselementen umfasst, wobei insbesondere an den Stützelementen der Trägerstruktur jeweils zwei oder mehr Bepflanzungselemente angeordnet, insbesondere befestigt, sind, die vorzugsweise übereinander zwischen dem Untergrund und der Schutzeinheit angeordnet sind. Insbesondere weisen die übereinander angeordneten Bepflanzungselemente jeweils einen unterschiedlichen minimalen Abstand zum Untergrund, insbesondere zur Aufständerfläche, auf. Vorzugsweise erstrecken sich die übereinander angeordneten Bepflanzungselemente zumindest im Wesentlichen parallel zueinander und bevorzugt zumindest im Wesentlichen parallel zu einer Horizontalen, der Aufständerfläche und/oder dem Untergrund. Bevorzugt weisen/weist die/das Bepflanzungselement(e) in einer senkrecht zu deren/dessen Haupterstreckungsachse angeordneten Querschnittsfläche betrachtet eine eckige oder runde Grundform auf, die insbesondere in eine vom Untergrund abgewandte Richtung zumindest teilweise offen ausgebildet ist.

Beispielsweise sind/ist die/das Bepflanzungselement(e) aus einem, insbesondere witterungsbeständigem und/oder wetterfesten, Kunststoff und/oder aus einem Blech ausgebildet. Besonders bevorzugt sind die in Reihenanordnung angeordneten Kulturpflanzen in den Reihen von Bepflanzungselementen angeordnet. Insbesondere entspricht eine Anordnung der Reihen von Bepflanzungselementen, insbesondere relativ zur Trägerstruktur, zumindest im Wesentlichen der Reihenanordnung der Kulturpflanzen. Es ist denkbar, dass die/das Bepflanzungselement(e) jeweils dazu vorgesehen sind/ist, eine Mehrzahl von Pflanzentöpfen mit Kulturpflanzen und Pflanzenerde o. dgl. aufzunehmen. Alternativ oder zusätzlich ist denkbar, dass die/das Bepflanzungselement(e), insbesondere entlang der maximalen Längserstreckung der Trägerstruktur und/oder der Schutzeinheit, mehrteilig ausgebildet sind.

Ferner wird vorgeschlagen, dass die Bepflanzungseinheit zumindest ein Kanalelement umfasst, das dazu vorgesehen ist, Abwasser zu sammeln und gerichtet, insbesondere zumindest im Wesentlichen parallel zu einer Haupterstreckungsachse der Bepflanzungseinheit und/oder eines Bepflanzungselements der Bepflanzungseinheit, an dem insbesondere das Kanalelement angeordnet ist, abzuleiten. Es kann eine vorteilhaft einfache Bewässerung, Düngung und/oder Behandlung von über die Bepflanzungseinheit gehaltenen Kulturpflanzen ermöglicht werden. Es kann eine Ausschwemmung von Pflanzenerde bei einem Bewässern der Kulturpflanzen vorteilhaft verhindert werden. Es kann vorteilhaft eine Wiederverwertung des Abwassers ermöglicht werden. Es kann ein Abfließen des Abwassers in den den Untergrund der Schutzvorrichtung bildenden Erdboden vorteilhaft verhindert werden. Unter "Abwasser" soll insbesondere bei einem Kultivieren der Kulturpflanzen von den Kulturpflanzen und/oder der die Kulturpflanzen umgebenden Pflanzenerde o.dgl. nicht aufgenommene Flüssigkeit, insbesondere Wasser, Dünger und/oder Pflanzenschutzmittel, verstanden werden. Insbesondere setzt sich das Abwasser an einem Boden der Bepflanzungselemente ab. Unter einem "Kanalelement" soll insbesondere eine Baueinheit verstanden werden, die zumindest teilweise zu einer Führung eines Fluids, insbesondere einer Flüssigkeit, vorgesehen ist, und die das Fluid in eine Strömungsrichtung gesehen unmittelbar zumindest teilweise, vorzugsweise auf drei Seiten und besonders vorteilhaft zumindest größtenteils, umschließt. Vorzugsweise ist eine Haupterstreckung des Kanalelements parallel zur Strömungsrichtung des Fluids ausgerichtet und zumindest 2-mal, insbesondere wenigstens 5 mal und vorteilhaft zumindest 10-mal länger als zumindest eine Querschnittserstreckung des Kanalelements. Bevorzugt ist das zumindest eine Kanalelement dazu vorgesehen, ein Ablauf des Abwassers auf den Untergrund, insbesondere in ein den Untergrund bildendes Erdreich, zu verhindern. In einer bevorzugten Ausgestaltung ist das zumindest eine Kanalelement dazu vorgesehen, das Abwasser zumindest im Wesentlichen getrennt von den Kulturpflanzen zu sammeln und/oder abzuleiten. Vorzugsweise ist das zumindest eine Kanalelement an dem zumindest einen Bepflanzungselement der Bepflanzungseinheit angeordnet. Es ist denkbar, dass das zumindest eine Kanalelement einteilig mit zumindest einem Bepflanzungselement der Bepflanzungseinheit ausgebildet ist. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Alternativ ist denkbar, dass das zumindest eine Kanalelement an zumindest einem Bepflanzungselement der Bepflanzungseinheit befestigt ist. Insbesondere ist das Kanalelement an einer Unterseite zumindest eines Bepflanzungselements der Bepflanzungseinheit angeordnet. Es ist auch denkbar, dass das Kanalelement beabstandet unterhalb von Bepflanzungselementen der Bepflanzungseinheit angeordnet ist. Vorzugsweise ist das zumindest eine Kanalelement, insbesondere über ein Bepflanzungselement der Bepflanzungseinheit, an der Trägerstruktur, insbesondere einem Stützelement der Trägerstruktur, angeordnet, insbesondere befestigt. Besonders bevorzugt umfasst die Bepflanzungseinheit eine Vielzahl von Kanalelementen, die jeweils an Bepflanzungselementen angeordnet und/oder ausgebildet sind. Bevorzugt ist an jedem Bepflanzungselement der Bepflanzungseinheit zumindest ein, insbesondere genau ein, Kanalelement angeordnet. Bevorzugt begrenzen Bepflanzungselemente der Bepflanzungseinheit jeweils an einer Unterseite, insbesondere in Richtung des Untergrunds, zumindest eine Durchführung zu einem Ablauf eines Fluids, wobei vorzugsweise jeweils ein Kanalelement der Bepflanzungseinheit derart angeordnet ist, dass ein durch die zumindest eine Durchführung ablaufendes Fluid über das Kanalelement aufgefangen, gesammelt und/oder abgeleitet wird. Bevorzugt sind/ist die/das Kanalelement dazu vorgesehen, Abwasser und/oder ablaufendes Fluid aus einer Reihe von Bepflanzungselementen zu sammeln und gerichtet abzuleiten. Es ist denkbar, dass die/das Kanalelement(e) dazu vorgesehen sind/ist, in Bepflanzungselementen angeordnete Kulturpflanzen zu bewässern, wobei beispielsweise Abwasser, überschüssiger Dünger, Pflanzenschutzmittel o. dgl. in einem in den/dem Kanalelement(en) geführten Wasserstrom gesammelt und über die/das Kanalelement(e) abgeleitet wird. Alternativ oder zusätzlich ist denkbar, dass die Bepflanzungseinheit zumindest ein weiteres Kanalelement zu einer Bewässerung von Kulturpflanzen umfasst, das insbesondere getrennt von dem zumindest einen Kanalelement ausgebildet ist. Beispielsweise sind/ist die/das Kanalelement(e) aus einem, insbesondere witterungsbeständigen und/oder wetterfesten, Kunststoff und/oder aus einem Blech ausgebildet. Es ist denkbar, dass die Bepflanzungseinheit zumindest ein Filter- und/oder Wiederaufbereitungssystem zu einem Filtern und/oder einem Wiederaufbereiten des Abwassers umfasst, wobei insbesondere die Bepflanzungseinheit dazu vorgesehen ist, das gefilterte und/oder wiederaufbereitete Abwasser zu einer Bewässerung der Kulturpflanzen wiederzuverwenden. Vorzugsweise sind/ist die/das Kanalelement(e) zumindest im Wesentlichen parallel zu den/dem Bepflanzungselement(en) und/oder zu einer Horizontalen, zu der Aufständerfläche und/oder zu dem Untergrund angeordnet. Alternativ ist denkbar, dass die/das Kanalelement(e) relativ zu einer Horizontalen, der Aufständerfläche und/oder dem Untergrund geneigt angeordnet sind/ist und insbesondere dazu vorgesehen sind/ist, das Abwasser über die Schwerkraft abzuleiten. Bevorzugt sind/ist die/das Kanalelement(e) rinnenförmig ausgebildet und weisen/weist insbesondere senkrecht zu einer Haupterstreckungsachse des/der Kanalelements/e jeweils eine eckige oder runde Querschnittsfläche auf. Vorzugsweise begrenzen die/das Kanalelement(e) jeweils zumindest eine Ausnehmung. Insbesondere ist die Ausnehmung zumindest fluidtechnisch mit durch die/das Bepflanzungselement(e) begrenzten Durchführungen verbunden. Bevorzugt begrenzt ein Boden eines Bepflanzungselements jeweils eine über ein Kanalelement der Bepflanzungseinheit begrenzte Ausnehmung zumindest teilweise. Alternativ oder zusätzlich ist denkbar, dass Bepflanzungselemente der Bepflanzungseinheit dazu vorgesehen sind, beispielsweise an einem Boden der Bepflanzungselemente, Abwasser zu sammeln und gerichtet abzuleiten. Insbesondere ist denkbar, dass der Boden der Bepflanzungselemente, insbesondere über eine Form des Bodens, derart ausgebildet ist, dass ein Abtragen von Pflanzenerde o. dgl. bei einem Ableiten des Abwassers zumindest im Wesentlichen verhindert wird. Zusätzlich ist denkbar, dass die Bepflanzungseinheit zumindest eine oder mehrere Filterelemente umfasst, die vorzugsweise zwischen einem der/dem Bepflanzungselement(e) und dem zumindest einen Kanalelement oder einem der Kanalelemente angeordnet ist. Bevorzugt sind/ist die/das Filterelement(e) an den von den/dem Bepflanzungselement(en) begrenzten Durchführungen angeordnet. Bevorzugt sind/ist die/das Filterelement(e) dazu vorgesehen, von dem zumindest einen Bepflanzungselement in das zumindest eine Kanalelement ablaufendes Abwasser hinsichtlich Pflanzenerde, Pflanzenteilen o. dgl. zu filtern. Es ist denkbar, dass Filterelemente und das zumindest eine Bepflanzungselement oder das zumindest eine Kanalelement einteilig ausgebildet sind.

Außerdem wird ein Schutzvorrichtungssystem mit zumindest zwei Schutzvorrichtungen vorgeschlagen, wobei die beiden Schutzvorrichtungen unterschiedliche Lichtdurchlässigkeiten zur Anpassung an geologisch und/oder botanisch bedingte Kenngrößen aufweisen. Insbesondere sind die zumindest zwei Schutzvorrichtungen zumindest im Wesentlichen baugleich ausgebildet. Vorzugsweise weisen bei einer baugleichen Ausbildung höchstens drei bautechnische Kenngrößen, wie beispielsweise die Firsthöhe, die Stützbreite, der Kippwinkel der Abstützebenen und/oder der Dachwinkel zumindest einer Schutzvorrichtung eine relative Abweichung zu zumindest drei korrelierenden bautechnischen Kenngrößen zumindest einer weiteren Schutzvorrichtung von insbesondere höchstens 20 %, vorzugsweise höchstens 15 % und bevorzugt höchstens 10 % auf. Bevorzugt sind zumindest zwei Schutzvorrichtungen unabhängig von einer Ausbildung und/oder einem Vorhandensein des zumindest einen weiteren Schutzelements baugleich ausgebildet. Vorzugsweise erfolgt eine Anpassung einer Lichtdurchlässigkeit mittels einer relativen Veränderung einer Lichtdurchlässigkeitskenngröße der zumindest einen Schutzvorrichtung relativ zu der zumindest einen weiteren Schutzvorrichtung. Bevorzugt ist eine Lichtdurchlässigkeitskenngröße von der Breite der Luftzirkulationsöffnung, des Abstands von zumindest zwei zumindest im Wesentlichen parallel zu einer der Querachsen der jeweiligen zumindest zwei Abstützebenen benachbarten Solarelemente, dem Abstand von zumindest zwei zumindest im Wesentlichen parallel zu der Längsachse der Trägerstruktur benachbarten Solarelementen und/oder einer Zellendichte zumindest eines Solarelements gebildet. Die Lichtdurchlässigkeitskenngröße der zumindest einen Schutzvorrichtung weicht relativ zu der Lichtdurchlässigkeitskenngröße der zumindest einen weiteren Schutzvorrichtung um wenigstens 10 %, vorzugsweise um wenigstens 20 %, bevorzugt um wenigstens 30 % und besonders bevorzugt um wenigstens 40 % ab. Vorzugsweise ist die Anpassung der Lichtdurchlässigkeit dazu vorgesehen, die zumindest eine Schutzvorrichtung oder die zumindest eine weitere Schutzvorrichtung an eine geologisch bedingte Sonnenstrahlungsintensität anzupassen. Des Weiteren ist die zumindest eine Schutzvorrichtung oder die zumindest eine weitere Schutzvorrichtung dazu vorgesehen, eine Lichtdurchlässigkeitskenngröße an einen Lebenszyklus, einen Stoffwechsel und/oder ein Wachstum der zumindest einen Kulturpflanze anzupassen. Durch die erfindungsgemäße Ausgestaltung kann eine Schutzvorrichtung vorteilhaft an äußere Umweltbedingungen angepasst werden. Es kann vorteilhaft eine Optimierung eines Ertrags und/oder eines Wachstumsverhaltens der geschützten Kulturpflanze erreicht werden. Es kann des Weiteren eine Schutzwirkung vorteilhaft an eine Sonnenstrahlenintensität, insbesondere abhängig von einer geologischen Lage, angepasst werden.

Außerdem wird ein Verfahren mit einer erfindungsgemäßen Schutzvorrichtung zum Schutz zumindest einer Reihenanordnung von zumindest einer Kulturpflanze vorgeschlagen, durch die vorzugsweise zumindest eine Reihenanordnung von zumindest einer Kulturpflanze, insbesondere von kultiviertem Halbschattengemüse und/oder kultivierten Waldfrüchten, geschützt wird. Die zumindest eine Reihenanordnung der zumindest einen Kulturpflanze erstreckt sich bevorzugt zumindest im Wesentlichen parallel zu der Längsachse der Trägerstruktur. Die Längsachse der Trägerstruktur ist vorzugsweise zumindest im Wesentlichen parallel zu einer Nord-Süd-Richtung ausgerichtet. Zum Schutz zumindest eines Abschnitts der zumindest einen Reihenanordnung von der zumindest einen Kulturpflanze ist das zumindest eine Solarelement mittig oberhalb der zumindest einen Reihenanordnung von der zumindest einen Kulturpflanze montiert. Die mittige Anordnung des zumindest einen Solarelements oberhalb des zumindest einen Abschnitts der Reihenanordnung schützt die zumindest eine Kulturpflanze vor einer direkten Sonnenstrahlung bei einem Azimutwinkel eines Sonnenstands in einem Wertebereich von insbesondere +10 ° bis -10 ° Azimut, vorzugsweise von +20 ° bis -20 ° Azimut und besonders bevorzugt von +30 ° bis - 30 ° Azimut. Durch die erfindungsgemäße Ausgestaltung können die kultivierten Waldfrüchte und/oder das kultivierte Halbschattengemüse vor einer größten Sonnenstrahlung geschützt werden. Es kann ein vorteilhaft ursprünglich natürlicher Standort in einem Wald simuliert werden.

Ferner wird vorgeschlagen, dass eine, insbesondere die bereits zuvor genannte, zumindest eine Reihenanordnung von zumindest einer Kulturpflanze, insbesondere von kultiviertem Halbschattengemüse und/oder kultivierten Waldfrüchten vor Hagel, Regen, Sonnenbrand, Hitzestau und/oder vor Schädlingen, insbesondere vor einem Weinessigfliegenschwarm, geschützt wird. Das zumindest eine Solarelement schützt bevorzugt zumindest einen Abschnitt der zumindest eine Reihenanordnung von der zumindest einen Kulturpflanze vor einem Niederschlag und/oder einer elektromagnetischen Strahlung, insbesondere Sonnenstrahlung. Das zumindest eine Solarelement schützt bevorzugt zumindest einen Abschnitt der zumindest einen Reihenanordnung von der zumindest einen Kulturpflanze vor Regen, Tau, Hagel, Schnee, Graupel und/oder intensiver elektromagnetischer Strahlung, insbesondere Sonnenstrahlung. Das zumindest eine weitere Schutzelement schützt die zumindest eine Reihenanordnung von der zumindest einen Kulturpflanze bevorzugt vor Schädlingen und/oder elektromagnetischer Strahlung, insbesondere Sonnenstrahlung. Insbesondere schützt die Schutzvorrichtung mit dem zumindest einen weiteren Schutzelement die zumindest eine Reihenanordnung von der zumindest einen Kulturpflanze vor vorzugsweise fliegenden Schädlingsschwärmen. Des Weiteren erzeugt die zumindest eine Luftzirkulationsöffnung vorzugsweise einen Luftstrom. Die zumindest eine Luftzirkulationsöffnung schützt die zumindest eine Reihenanordnung von kultivierten Waldfrüchten vor einem Hitzestau. Durch das erfindungsgemäße Verfahren kann ein gesamtwirtschaftlicher Ertrag maximiert werden. Es kann vorteilhaft ein landwirtschaftlicher und energiewirtschaftlicher Ertrag maximiert werden. Besonders vorteilhaft kann ein Sonnenbrand auf einem Blattwerk der Kulturpflanze weitestgehend verhindert werden. Es können vorteilhaft Ernteausfälle verhindert werden.

Des Weiteren wird vorgeschlagen, dass eine, insbesondere die bereits zuvor genannte, zumindest eine Reihenanordnung von kultivierten Waldfrüchten, insbesondere von kultivierten Himbeeren und/oder Brombeeren, geschützt wird. Die zumindest eine Reihenanordnung von kultivierten Waldfrüchten erstreckt sich bevorzugt zumindest im Wesentlichen parallel zu der Längsachse der Trägerstruktur. Zum Schutz zumindest eines Abschnitts der zumindest einen Reihenanordnung von kultivierten Waldfrüchten ist das zumindest eine Solarelement mittig oberhalb der zumindest einen Reihenanordnung von kultivierten Waldfrüchten montiert. Das zumindest eine Solarelement schützt bevorzugt zumindest einen Abschnitt der zumindest einen Reihenanordnung von kultivierten Waldfrüchten vor einem Niederschlag und/oder einer elektromagnetischen Strahlung, insbesondere Sonnenstrahlung. Das zumindest eine Solarelement schützt bevorzugt zumindest einen Abschnitt der zumindest einen Reihenanordnung von kultivierten Waldfrüchten vor Regen, Tau, Hagel, Schnee, Graupel und/oder intensiver elektromagnetischer Strahlung, insbesondere Sonnenstrahlung. Das zumindest eine weitere Schutzelement schützt die zumindest eine Reihenanordnung von kultivierten Waldfrüchten bevorzugt vor Schädlingen und/oder elektromagnetischer Strahlung, insbesondere Sonnenstrahlung. Insbesondere schützt die Schutzvorrichtung die zumindest eine Reihenanordnung von kultivierten Waldfrüchten vor vorzugsweise fliegenden Schädlingsschwärmen. Des Weiteren erzeugt die zumindest eine Luftzirkulationsöffnung vorzugsweise einen Luftstrom. Die zumindest eine Luftzirkulationsöffnung schützt die zumindest eine Reihenanordnung von kultivierten Waldfrüchten vor einem Hitzestau. Durch das erfindungsgemäße Verfahren kann ein gesamtwirtschaftlicher Ertrag maximiert werden. Es kann vorteilhaft ein landwirtschaftlicher und energiewirtschaftlicher Ertrag maximiert werden. Besonders vorteilhaft kann ein Sonnenbrand auf einem Blattwerk der kultivierten Waldfrüchten, wie Himbeeren und/oder Brombeeren, weitestgehend verhindert werden. Es können vorteilhaft Ernteausfälle verhindert werden.

Des Weiteren wird vorgeschlagen, dass eine Lichtdurchlässigkeit der Schutzvorrichtung an zumindest eine geologisch und/oder botanisch bedingte Kenngröße angepasst wird. Die Lichtdurchlässigkeit des zumindest einen Solarelements wird vorteilhaft durch eine Solarzellendichte angepasst. Die Solarzellendichte wird bevorzugt in Abhängigkeit einer größten, geologisch bedingten Sonneneinstrahlung angepasst. Die Solarzellendichte eines Solarelements mit einer Solarelementfläche von etwa 2 m² wird vorzugsweise von 72 Solarzellen auf 60 Solarzellen pro 2 m² verringert. In nördlichen Breiten wird bevorzugt eine größere Anzahl an Solarzellen pro Solarelement, insbesondere bei gleicher Solarelementfläche, als in südlicheren Breiten verwendet. Des Weiteren wird eine Lichtdurchlässigkeit durch Veränderung eines Abstands zwischen zumindest zwei benachbarten Solarelementen, insbesondere zwischen zumindest zwei baugleichen Schutzvorrichtungen, variiert. Ferner wird die Lichtdurchlässigkeit der Schutzvorrichtung an ein Wachstumsverhalten, an einen Stoffwechsel und/oder einen Lebenszyklus der zumindest einen Kulturpflanze angepasst. Durch die erfindungsgemäße Ausgestaltung kann eine Landnutzung optimiert werden. Es kann ein Ernteertrag und ein energiewirtschaftlicher Ertrag optimiert werden. Es kann eine vorteilhaft hohe Nutzung eines Feldes erreicht werden.

Die erfindungsgemäße Schutzvorrichtung soll hierbei nicht auf die oben beschriebene Anwendung und Ausführungsform beschränkt sein. Insbesondere kann die erfindungsgemäße Schutzvorrichtung und/oder das erfindungsgemäße Schutzsystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Übersicht von einem erfindungsgemäßen Schutzvorrichtungssystem mit zwei erfindungsgemäßen Schutzvorrichtungen in einem Funktionszustand,
- Fig. 2: eine Seitenansicht einer der zwei erfindungsgemäßen Schutzvorrichtungen in dem Funktionszustand,
- Fig. 3: ein Schutzvorrichtungssystem mit zwei erfindungsgemäßen Schutzvorrichtungen mit jeweils differierenden Solarelementen,
- Fig. 4: eine alternative Ausgestaltungsform einer erfindungsgemäßen Schutzvorrichtung und
- Fig. 5: eine weitere alternative Ausgestaltung einer erfindungsgemäßen Schutzvorrichtung in einer Schnittansicht.

### Beschreibung der Ausführungsbeispiele

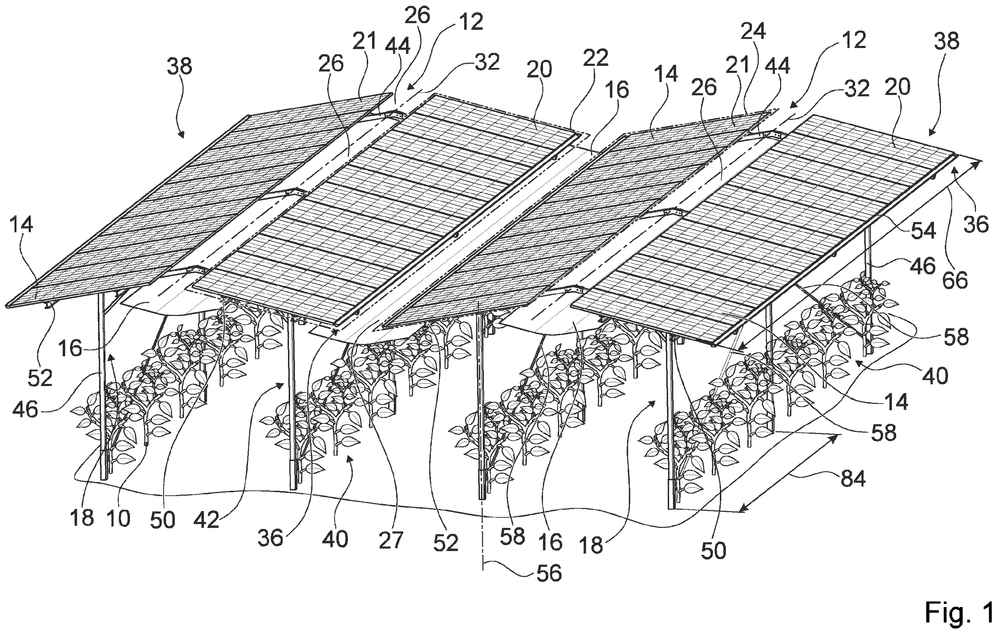

Fig. 1 zeigt ein Schutzvorrichtungssystem mit zwei identischen Schutzvorrichtungen 38 in einem Funktionszustand. Die zwei Schutzvorrichtungen 38 sind baugleich ausgebildet. Im Folgenden wird der Übersichtlichkeit halber eine der zwei Schutzvorrichtungen 38 beschrieben. Die Schutzvorrichtung 38 ist als eine Pflanzenschutzvorrichtung ausgebildet. Die Schutzvorrichtung 38 schützt zumindest eine Kulturpflanze 10 mit zwei unterschiedlichen Schutzelementen 14, 16 einer Schutzeinheit 12. Durch die Schutzvorrichtung 38 wird die zumindest eine Kulturpflanze 10 vor zumindest einer Witterungsbedingung und/oder einem Schädlingsbefall geschützt. Des Weiteren weist die Schutzvorrichtung 38 eine Trägerstruktur 18 auf. Die Trägerstruktur 18 ist dazu vorgesehen, erste Schutzelemente 14 und weitere Schutzelemente 16 abzustützen. Die ersten Schutzelemente 14 sind als Solarelemente 20, 21 zu einer Energieumwandlung ausgebildet. Die Solarelemente 20, 21 sind jeweils als Photovoltaikelement ausgebildet.

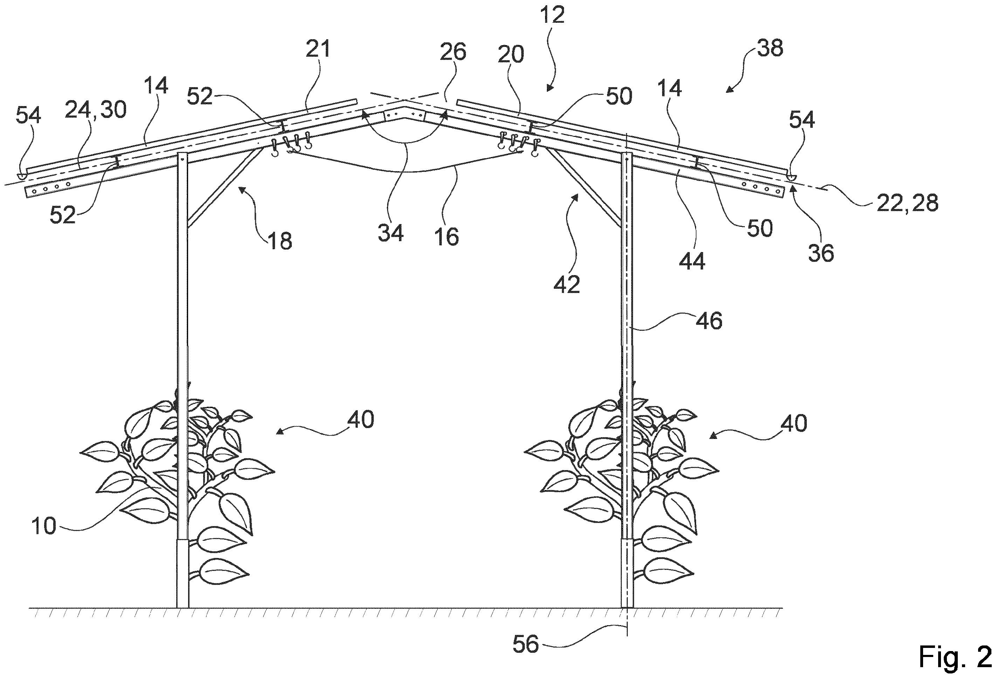

Die Trägerstruktur 18 der Schutzvorrichtung 38 weist in dem vorliegenden Ausführungsbeispiel drei Stützstrukturen 42 auf. Eine Stützstruktur 42 ist schematisch in Figur 2 zwei dargestellt. Die Stützstrukturen 42 weisen eine satteldachartige Struktur auf. Die Stützstruktur 42 besteht aus zwei Sparrenelementen 44 und zwei Stützelementen 46. Die Stützelemente 46 sind teilweise als Rammprofile ausgebildet, die dazu vorgesehen sind, in einer Aufständerfläche gerammt und/oder eingetrieben zu werden. Die zwei Stützelemente 46 und die zwei Sparrenelemente 44 sind durch eine dem Fachmann bekannte Art zu der Stützstruktur 42 verbunden. Die Stützstruktur 42 weist einen First auf, in dem die zwei Sparrenelemente 44 miteinander verbunden sind. Die zwei Sparrenelemente 44 sind in einem montierten Zustand der Stützstruktur 42 mit einem relativen Winkel von etwa 156 ° miteinander verbunden. Die zwei Sparrenelemente 44 bilden jeweils einen Dachneigungswinkel von 12 ° aus. Ein erstes Stützelement 46 ist mit einem ersten Sparrenelement 44 verbunden. Ein zweites Stützelement 46 ist mit einem weiteren Sparrenelement 44 verbunden. Die zwei Stützelemente 46 weisen in dem montierten Zustand der Stützstruktur 42 eine Stützbreite auf, die in einem Wertebereich von 1,4 m bis 2,8 m liegt. Zusätzlich weist die Stützstruktur 42 zwei Streben auf. Eine erste der zwei Streben ist mit dem ersten Stützelement 46 und dem ersten Sparrenelement 44 verbunden. Eine zweite der zwei Streben ist mit dem zweiten Stützelement 46 und dem zweiten Sparrenelement 44 verbunden. Die zwei Streben sind dazu vorgesehen, die Stützstruktur 42 zu versteifen. Die drei Stützstrukturen 42 sind mit einem Abstand aus einem Wertebereich von 4 m bis 5 m voneinander beabstandet angeordnet. Die jeweils zwei Sparrenelemente 44 und die jeweils zwei Stützelemente 46 der drei Stützstrukturen 42 sind in einem montierten Zustand der Trägerstruktur 18 im Wesentlichen parallel zueinander angeordnet. Die drei Stützstrukturen 42 bilden in dem montierten Zustand der Trägerstruktur 18 eine gemeinsame Firstlinie aus. Die Firstlinie bildet eine Längsachse 32 der Trägerstruktur 18. In dem montierten Zustand der Trägerstruktur 18 sind die Rammprofile durch die Aufständerfläche in einen Boden gerammt. Des Weiteren weist die Trägerstruktur 18 Verwindungselemente 58 auf. Die Verwindungselemente 58 verbinden jeweils zwei Stützelemente 46 von jeweils zumindest zwei benachbarten Stützstrukturen 42 entlang einer diagonalen Achse, welche zumindest im Wesentlichen parallel zu der Längsachse 32 verläuft. Die Trägerstruktur 18 weist in dem montierten Zustand einen maximalen Höhenwert parallel zu einer Hochachse 56 der Schutzvorrichtung 38 über der Aufständerfläche aus einem Wertebereich von 2,5 m bis zu 4,5 m auf.

Des Weiteren weist die Trägerstruktur 18 zwei Abstützebenen 22, 24 auf. Die zwei Abstützebenen 22, 24 sind jeweils zu einer Abstützung von Solarelementen 20, 21 vorgesehen. Die drei ersten Sparrenelemente 44 der drei Stützstrukturen 42 spannen eine erste Abstützebene 22 auf. Die drei zweiten Sparrenelemente 44 der drei Stützstrukturen 42 spannen eine zweite Abstützebene 22 auf. Die erste Abstützebene 22 und die zweite Abstützebene 22 sind zueinander verkippt angeordnet. Die zwei Abstützebenen 22, 24 weisen in dem montierten Zustand der Trägerstruktur 18 einen relativen Kippwinkel 34 zueinander in einem Wertebereich von 153 ° bis 159 ° auf.

Die Trägerstruktur 18 weist vier Trägerelemente 50, 52 auf. Eine Haupterstreckungsachse der vier Trägerelemente 50, 52 ist im Wesentlichen parallel zu der Längsachse 32 der Trägerstruktur 18 angeordnet. Zwei der vier Trägerelemente 50 sind in einer Ebene parallel zu der ersten Abstützebene 22 angeordnet. Zwei weitere der vier Trägerelemente 52 sind in einer Ebene parallel zu der zweiten Abstützebene 24 angeordnet. Die zwei der vier Trägerelemente 50 sind dazu vorgesehen, erste Solarelemente 20 im Wesentlichen parallel zu der Längsachse 32 der Trägerstruktur 18 aufzunehmen. Die zwei weiteren der vier Trägerelemente 52 sind dazu vorgesehen, zweite Solarelemente 21 im Wesentlichen parallel zu der Längsachse 32 der Trägerstruktur 18 aufzunehmen. Die ersten Solarelemente 20 sind mittels der zwei Trägerelemente 50 auf der ersten Abstützebene 22 angeordnet. Die ersten Solarelemente 20 sind entlang einer Achse parallel zu der Längsachse 32 im Wesentlichen abstandsfrei auf den zwei Trägerelementen 50 angeordnet. Benachbarte erste Solarelemente 20 weisen einen maximalen Abstand zueinander auf, der in einem Wertebereich von 1 cm bis 3 cm liegt. Die zweiten Solarelemente 21 sind mittels der zwei weiteren Trägerelemente 52 auf der zweiten Abstützebene 24 angeordnet. Die zweiten Solarelemente 21 sind entlang einer Achse parallel zu der Längsachse 32 im Wesentlichen abstandsfrei auf den zwei weiteren Trägerelementen 52 angeordnet. Benachbarte zweite Solarelemente 21 weisen einen maximalen Abstand zueinander auf, der in einem Wertebereich von 1 cm bis 3 cm liegt.

Des Weiteren begrenzen die ersten Solarelemente 20 und die zweiten Solarelemente 21 eine Luftzirkulationsöffnung 26. Ein kleinster Abstand des ersten Solarelements 20 zu dem zweiten Solarelement 21 beträgt in dem montierten Zustand der Schutzvorrichtung 38, bemessen entlang einer Achse senkrecht zu der Hochachse 56 der Schutzvorrichtung 38 einen Wert aus einem Wertebereich von 55 cm bis 65 cm. Die ersten Solarelemente 20 und die zweiten Solarelemente 21 sind entlang einer Achse senkrecht zu der Längsachse 32 der Trägerstruktur 18 und senkrecht zu der Hochachse 56 der Schutzvorrichtung 38 beabstandet angeordnet. Die ersten Solarelemente 20 und die zweiten Solarelemente 21 weisen entlang einer Achse senkrecht zu einer Hochachse 56 der Schutzvorrichtung 38 einen kleinsten Abstand zueinander auf, der in einem Wertebereich von 50 cm bis 70 cm liegt.

Ferner weist die Schutzvorrichtung 38 weitere Schutzelemente 16 auf. Die weiteren Schutzelemente 16 sind jeweils in einem Traufbereich und in einem Firstbereich der Trägerstruktur 18 angeordnet. Die weiteren Schutzelemente 16 sind als ein biegeweiches Material ausgebildet. In einem Traufbereich ist das weitere Schutzelement 16 dazu vorgesehen, an zwei Schutzvorrichtungen 38 angeordnet zu werden. Die ersten Solarelemente 20 einer ersten Schutzvorrichtung 38 bilden eine weitere Luftzirkulationsöffnung 27 mit einem zweiten Solarelement 21 einer benachbarten Schutzvorrichtung 38 aus. In einem Funktionszustand des weiteren Schutzelements 16 ist das weitere Schutzelement 16 unterhalb der Luftzirkulationsöffnung 26, 27 angeordnet. Das weitere Schutzelement 16 weist in der Ebene senkrecht zu der Längsachse 32 der Trägerstruktur 18 eine größere Ausdehnung als die Luftzirkulationsöffnung 26, 27 auf. In dem Funktionszustand weist das weitere Schutzelement 16 parallel zu der Hochachse 56 der Schutzvorrichtung 38 einen kleinsten Abstand auf, der innerhalb eines Wertebereichs von 4 cm bis 8 cm liegt. Eine Beabstandung des weiteren Schutzelements 16 in dem Funktionszustand des weiteren Schutzelements 16 ist dazu vorgesehen, einen Luftstrom durch die Luftzirkulationsöffnung 26, 27 passieren zu lassen. Das weitere Schutzelement 16 ist mittels einer Hakenverbindung mit der Trägerstruktur 18 lösbar verbunden. Des Weiteren ist das weitere Schutzelement 16 als Netz ausgebildet. Das Netz ist dazu vorgesehen, Schädlingsschwärme abzuhalten. Eine Maschenweite des Netzes beträgt eine Größe von 0,6 mm bis 1 mm. Das Netz ist derart ausgebildet, dass ein Weinessigfliegenschwarm vor einem Durchflug gehindert wird.

Des Weiteren weist die Schutzvorrichtung 38 eine Regenwassersammeleinheit 36 auf. Die Regenwassersammeleinheit 36 weist mehrere Rinnenelemente 54 auf. Die Rinnenelemente 54 sind an einer Unterseite der Solarelemente 20, 21 angeordnet. Die Rinnenelemente 54 sind dazu vorgesehen, von den Solarelementen 20, 21 ablaufenden Regen aufzusammeln. Des Weiteren sind die Rinnenelemente 54 dazu vorgesehen, Regenwasser in einen nicht näher dargestellten Regenwassersammelbehälter zu leiten.

Durch die Schutzvorrichtung 38 werden zwei Reihenanordnungen 40 von kultivierten Waldfrüchten geschützt. Die Schutzvorrichtung 38 schützt die kultivierten Waldfrüchte vor Hagel, Regen, Sonnenbrand, Hitzestau und/oder vor Schädlingen sowie vor einem Weinessigfliegenschwarm. Ferner sind die kultivierten Waldfrüchte von kultivierten Himbeeren und/oder Brombeeren ausgebildet. Die Schutzvorrichtung 38 schützt die zwei Reihenanordnungen 40 von kultivierten Himbeeren und/oder Brombeeren.

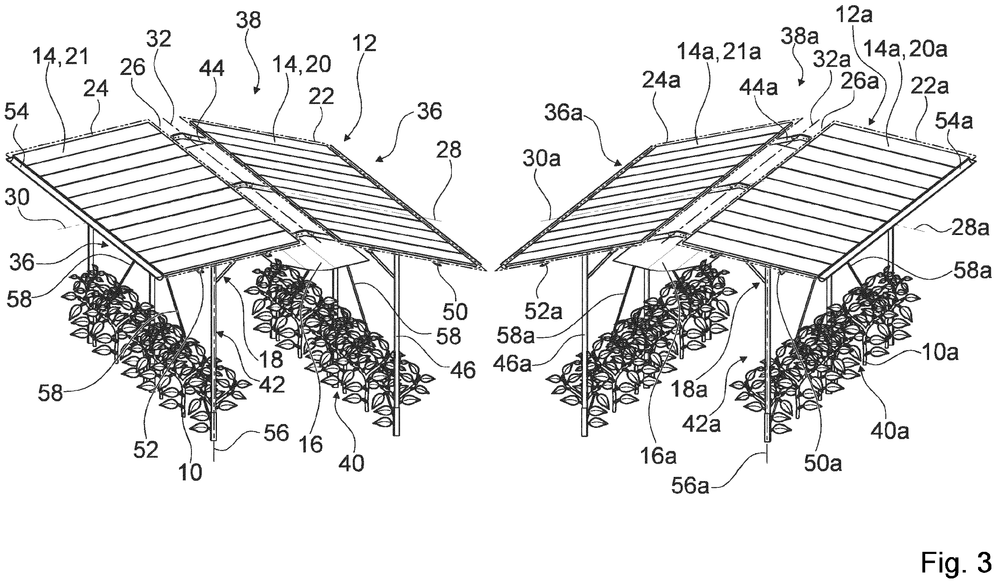

Figur 3 zeigt ein alternatives Schutzvorrichtungssystem mit der Schutzvorrichtung 38 und einer weiteren Schutzvorrichtung 38a. Die weitere Schutzvorrichtung 38a unterscheidet sich teilweise von der Schutzvorrichtung 38. Die Bezugszeichen zu der weiteren Schutzvorrichtung 38a sind zu einer einfachen Unterscheidung der Schutzvorrichtung 38 mit dem Suffix a versehen. Im Folgenden werden die Unterschiede zwischen der Schutzvorrichtung 38 und der weiteren Schutzvorrichtung 38a beschrieben, wobei bezüglich gleich bezeichneter Bauteile, insbesondere in Bezug auf Bauteile mit gleichen Bezugszeichen, grundsätzlich auch auf die Beschreibung der Schutzvorrichtung 38 in den Figuren 1 und 2 verwiesen werden kann. Die Schutzvorrichtung 38 weist die Trägerstruktur 18 auf. Die weitere Schutzvorrichtung 38a weist eine weitere Trägerstruktur 18a auf, die baugleich zu der Trägerstruktur 18 der Schutzvorrichtung 38 ausgebildet ist. Auf der Trägerstruktur 18 sind die Solarelemente 20, 21 wie zuvor beschrieben angeordnet. Auf der weiteren Trägerstruktur 18a sind andere Solarelemente 20a, 21a angeordnet. Die anderen Solarelemente 20a, 21a sind geometrisch im Wesentlichen identisch wie die Solarelemente 20, 21 ausgebildet. Die Solarelemente 20, 21 weisen eine geringere Lichtdurchlässigkeit relativ zu den anderen Solarelementen 20a, 21a auf. Die Solarelemente 20, 21 weisen 72 Photovoltaikzellen pro Solarelement 20, 21 auf. Die anderen Solarelemente 20a, 21a weisen bei gleicher geometrischer Dimension der Photovoltaikzellen und der Solarelemente 20, 20a, 21, 21a 60 Photovoltaikzellen pro Solarelement 20a, 21a auf. Die anderen Solarelemente 20a, 21a weisen eine geringere Photovoltaikzellendichte auf. Die Solarelemente 20, 21 weisen eine höhere Absorption und eine geringere Transmission von Sonnenlicht auf als die anderen Solarelemente 20a, 21a. Die Photovoltaikzellendichte ist dazu vorgesehen, bei konstanter Geometrie der Photovoltaikzelle und des Solarelements 20, 20a, 21, 21a, eine Lichtdurchlässigkeit der Solarelemente 20, 21 relativ zu einer Lichtdurchlässigkeit der anderen Solarelementen 20a, 21a in Abhängigkeit von botanischen und/oder geologischen Kenngrößen anzupassen.

Des Weiteren wird eine Lichtdurchlässigkeit der weiteren Schutzvorrichtung 38a relativ zu der Schutzvorrichtung 38 an geologische und/oder botanische Kenngrößen durch eine Veränderung der Photovoltaikzellendichte angepasst.

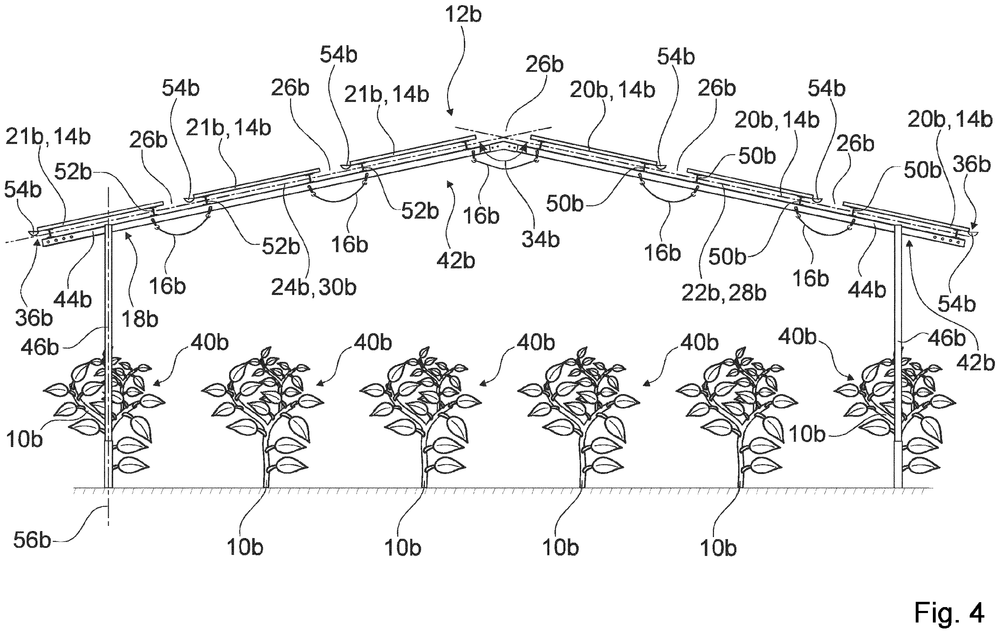

In der Figur 4 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist den Bezugszeichen des zweiten Ausführungsbeispiels der Buchstabe b nachgestellt.

Figur 4 zeigt eine alternativ ausgestaltete Schutzvorrichtung 38b. Die Schutzvorrichtung 38b weist eine Trägerstruktur 18b mit drei Stützstrukturen 42b auf. Die Stützstruktur 42b weist jeweils zwei Sparrenelemente 44b und jeweils zwei Stützelemente 46b auf. Des Weiteren spannen erste Sparrenelemente 44b der drei Stützstrukturen 42b eine erste Abstützebene 22b auf. Des Weiteren weisen zweite Sparrenelemente 44b eine zweite Abstützebene 24b auf.

Die Stützstrukturen 42b weisen eine satteldachartige Struktur auf. Die Stützstruktur 42b besteht aus zwei Sparrenelementen 44b und zwei Stützelementen 46b. Die Stützelemente 46b sind teilweise als Rammprofile ausgebildet, die dazu vorgesehen sind, in einen Boden gerammt und/oder eingetrieben zu werden. Die zwei Stützelemente 46b und die zwei Sparrenelemente 44b sind durch eine dem Fachmann bekannte Art zu der Stützstruktur 42b verbunden. Die Stützstruktur 42b weist einen First auf, in dem die zwei Sparrenelemente 44b miteinander verbunden sind. Die zwei Sparrenelemente 44b sind in einem montierten Zustand der Stützstruktur 42b mit einem relativen Winkel von etwa 156 ° miteinander verbunden. Die zwei Sparrenelemente 44b bilden jeweils einen Dachneigungswinkel von 12 ° aus. Ein erstes Stützelement 46b ist mit einem ersten Sparrenelement 44b verbunden. Ein zweites Stützelement 46b ist mit einem weiteren Sparrenelement 44b verbunden. Die zwei Stützelemente 46b weisen in dem montierten Zustand der Stützstruktur 42b eine Stützbreite auf, die in einem Wertebereich von 6,5 m bis 8,5 m liegt. Zusätzlich weist die Stützstruktur 42b zwei Streben auf. Eine erste der zwei Streben ist mit dem ersten Stützelement 46b und dem ersten Sparrenelement 44b verbunden. Eine zweite der zwei Streben ist mit dem zweiten Stützelement 46b und dem zweiten Sparrenelement 44b verbunden. Die zwei Streben sind dazu vorgesehen, die Stützstruktur 42b zu versteifen. Die drei Stützstrukturen 42b sind mit einem Abstand aus einem Wertebereich von 4 m bis 5 m voneinander beabstandet angeordnet. Die jeweils zwei Sparrenelemente 44b und die jeweils zwei Stützelemente 46b der drei Stützstrukturen 42b sind in einem montierten Zustand der Trägerstruktur 18b im Wesentlichen parallel zueinander angeordnet. In dem montierten Zustand der Trägerstruktur 18b sind die Rammprofile durch eine Aufständerfläche in den Boden gerammt. Des Weiteren weist die Trägerstruktur 18b Verwindungselemente 58b auf. Die Verwindungselemente 58b verbinden jeweils zwei Stützelemente 46b von jeweils zumindest zwei benachbarten Stützstrukturen 42b entlang einer diagonalen Achse, welche zumindest im Wesentlichen parallel zu einer Längsachse 32b verläuft. Die Trägerstruktur 18b weist in dem montierten Zustand einen maximalen Höhenwert parallel zu einer Hochachse 56b der Schutzvorrichtung 38b über der Aufständerfläche aus einem Wertebereich von 2,5 m bis zu 4,5 m auf.

Des Weiteren weist die Trägerstruktur 18b zwei Abstützebenen 22b, 24b auf. Die zwei Abstützebenen 22b, 24b sind jeweils zu einer Abstützung von Schutzelementen 14b vorgesehen. Die Schutzelemente sind als Solarelemente 20b, 21b ausgebildet. Die drei ersten Sparrenelemente 44b der drei Stützstrukturen 42b spannen eine erste Abstützebene 22b auf. Die drei zweiten Sparrenelemente 44b der drei Stützstrukturen 42b spannen eine zweite Abstützebene 22b auf. Die erste Abstützebene 22b und die zweite Abstützebene 22b sind zueinander verkippt angeordnet. Die zwei Abstützebenen 22b, 24b weisen in dem montierten Zustand der Trägerstruktur 18b einen relativen Kippwinkel 34b zueinander in einem Wertebereich von 153 ° bis 159 ° auf. Die erste Abstützebenen 22b ist dazu vorgesehen, erste Solarelemente 20b zumindest im Wesentlichen parallel zu einer ersten Querachse 28b aufzunehmen. Die erste Querachse 28b verläuft parallel zu einer Haupterstreckungsachse des ersten Sparrenelements 44b der Stützstruktur 42b. Des Weiteren ist die zweite Abstützebene 24b dazu vorgesehen, zweite Solarelemente 21b im Wesentlichen parallel zu einer zweiten Querachse 30b aufzunehmen. Die zweite Querachse 30b verläuft parallel zu einer Haupterstreckungsachse des zweiten Sparrenelements 44b der Stützstruktur 42b.

Die Trägerstruktur 18b weist zwölf Trägerelemente 50b ,52b auf. Haupterstreckungsachsen der zwölf Trägerelemente 50b, 52b verlaufen im Wesentlichen parallel zu der Längsachse 32b der Trägerstruktur 18b. Sechs der zwölf Trägerelemente 50b sind in einer Ebene parallel zu der ersten Abstützebene 22b angeordnet. Jeweils zwei der sechs Trägerelemente 50b sind dazu vorgesehen, erste Solarelemente 20b im Wesentlichen entlang einer Achse parallel zu der Längsachse 32b der Trägerstruktur 18b aufzunehmen. Die ersten Solarelemente 20b sind entlang der Achse parallel zu der Längsachse 32b benachbart angeordnet. Die entlang der Achse parallel zu der Längsachse 32b benachbart angeordneten ersten Solarelemente 20b weisen entlang einer Achse parallel zu der Längsachse 32b einen Abstand aus einem Wertebereich zwischen 1 cm und 3 cm auf. Des Weiteren sind drei jeweils paarweise angeordnete erste Trägerelemente 50b dazu vorgesehen, erste Solarelemente 20b entlang einer Achse im Wesentlichen parallel zu der ersten Querachse 28b benachbart aufzunehmen. Entlang der Achse parallel zu der ersten Querachse 28b benachbart angeordnete erste Solarelemente 20b sind voneinander beabstandet angeordnet. Entlang einer Achse parallel zu der ersten Querachse 28b weisen zwei benachbart angeordnete erste Solarelemente 20b einen Abstand aus einem Wertebereich von 50 cm bis 70 cm auf. Sechs weitere der zwölf Trägerelemente 52b sind in einer Ebene parallel zu der zweiten Abstützebene 24b angeordnet. Jeweils zwei der sechs weiteren Trägerelemente 52b sind dazu vorgesehen, zweite Solarelemente 21b im Wesentlichen entlang einer Achse parallel zu der Längsachse 32b der Trägerstruktur 18b aufzunehmen. Die zweiten Solarelemente 21b sind entlang der Achse parallel zu der Längsachse 32b benachbart angeordnet. Die entlang der Achse parallel zu der Längsachse 32b benachbart angeordneten zweiten Solarelemente 21b weisen entlang einer Achse parallel zu der Längsachse 32b einen Abstand aus einem Wertebereich zwischen 1 cm und 3 cm auf. Des Weiteren sind drei jeweils paarweise angeordnete zweite Trägerelemente 52b dazu vorgesehen, erste Solarelemente 20b entlang einer Achse im Wesentlichen parallel zu einer zweiten Querachse 30b benachbart aufzunehmen. Die zweite Querachse 30b verläuft parallel zu einer Haupterstreckungsachse des zweiten Sparrenelements 44b der Stützstruktur 42b. Entlang der Achse parallel zu der zweiten Querachse 30b benachbart angeordnete zweite Solarelemente 21b sind voneinander beabstandet angeordnet. Entlang einer Achse parallel zu der zweiten Querachse 30b weisen zwei benachbart angeordnete zweite Solarelemente 21b einen Abstand aus einem Wertebereich von 50 cm bis 70 cm auf. In einem montierten Funktionszustand weist die Schutzvorrichtung 38b 66 Solarelemente 20b, 21b auf. Die Trägerstruktur 18b ist dazu vorgesehen, 33 erste Solarelemente 20b auf der ersten Abstützebene 22b aufzunehmen. Jeweils elf der 33 ersten Solarelemente 20b sind jeweils entlang einer Achse parallel zu der Längsachse 32b benachbart zueinander angeordnet. Drei Reihen von elf parallel zu der Längsachse 32b benachbart angeordneten ersten Solarelementen 20b sind entlang einer Achse parallel zu der ersten Querachse 28b benachbart auf der ersten Abstützebene 22b parallel zueinander beabstandet angeordnet. Des Weiteren ist die Trägerstruktur 18b dazu vorgesehen, 33 zweite Solarelemente 21b auf der zweiten Abstützebene 24b aufzunehmen. Jeweils elf der 33 zweiten Solarelemente 21b sind jeweils entlang einer Achse parallel zu der Längsachse 32b benachbart zueinander angeordnet. Drei Reihen von elf parallel zu der Längsachse 32b benachbart angeordneten zweiten Solarelementen 21b sind entlang einer Achse parallel zu der zweiten Querachse 30b benachbart auf der zweiten Abstützebene 24b parallel zueinander beabstandet angeordnet.

Die ersten Solarelemente 20b und/oder die zweiten Solarelemente 21b begrenzen mehrere Luftzirkulationsöffnungen 26b. Eine Beabstandung von benachbarten ersten Solarelementen 20b entlang einer Achse parallel zu der ersten Querachse 28b und eine Beabstandung von zweiten Solarelementen 21b entlang einer Achse parallel zu der Querachse 30b ist jeweils als Luftzirkulationsöffnung 26b ausgebildet. Des Weiteren sind die ersten Solarelemente 20b in einem Firstbereich der Trägerstruktur 18b beabstandet von den zweiten Solarelementen 21b angeordnet. Die ersten Solarelemente 20b und die zweiten Solarelemente 21b sind entlang einer Achse senkrecht zu der Längsachse 32b der Trägerstruktur 18b und senkrecht zu der Hochachse 56b der Schutzvorrichtung 38b beabstandet angeordnet. Ein kleinster Abstand des ersten Solarelements 20b zu dem zweiten Solarelement 21b beträgt in dem montierten Zustand der Schutzvorrichtung 38b, bemessen entlang einer Achse senkrecht zu der Hochachse 56b der Schutzvorrichtung 38b, einen Wert aus einem Wertebereich von 55 cm bis 65 cm. Die ersten Solarelemente 20b und die zweiten Solarelemente 21b weisen entlang einer Achse senkrecht zu einer Hochachse 56b der Schutzvorrichtung 38 einen kleinsten Abstand zueinander auf, der in einem Wertebereich von 50 cm bis 70 cm liegt.

Ferner weist die Schutzvorrichtung 38b weitere Schutzelemente 16b auf. Die weiteren Schutzelemente 16b sind jeweils zwischen zwei benachbarten Solarelementen 20b, 21b angeordnet. Die weiteren Schutzelemente 16b sind als ein biegeweiches Material ausgebildet. Die weiteren Schutzelemente 16b sind als Netze ausgebildet. Die Netze weisen eine Maschenweite aus einem Maschenweitenbereich von 0,6 mm bis 1 mm auf. Das Netz ist derart ausgebildet, dass ein Weinessigfliegenschwarm vor einem Durchflug gehindert wird. Die Netze sind unterhalb der Luftzirkulationsöffnungen 26b angeordnet. In einem Funktionszustand der weiteren Schutzelemente 16b sind die weiteren Schutzelemente 16b unterhalb der Luftzirkulationsöffnung 26b angeordnet. Das weitere Schutzelement 16b weist in der Ebene senkrecht zu der Längsachse 32b der Trägerstruktur 18b eine größere Ausdehnung als die darüberliegende Luftzirkulationsöffnung 26b auf. In dem Funktionszustand weist das weitere Schutzelement 16b parallel zu der Hochachse 56b der Schutzvorrichtung 38b einen kleinsten Abstand auf, der innerhalb eines Wertebereichs von 4 cm bis 8 cm liegt. Eine Beabstandung des weiteren Schutzelements 16b in dem Funktionszustand des weiteren Schutzelements 16b ist dazu vorgesehen, einen Luftstrom durch die Luftzirkulationsöffnung 26b passieren zu lassen. Das weitere Schutzelement 16b ist mittels einer Hakenverbindung mit der Trägerstruktur 18b lösbar verbunden. Die Hakenelemente sind dazu vorgesehen, die Netze beabstandet zu den Solarelementen 20b, 21b aufzunehmen. In dem montierten Zustand der Schutzvorrichtung 38b weisen die Netze einen kleinsten Abstand zu den Solarelementen 20b, 21b, bemessen entlang einer Achse parallel zu der Hochachse 56b der Schutzvorrichtung 38b, aus einem Wertebereich von 8 cm bis 15 cm auf.

Durch die Schutzvorrichtung 38b werden mehrere Reihenanordnungen 40b von kultivierten Waldfrüchten geschützt. Die Schutzvorrichtung 38b schützt die kultivierten Waldfrüchte vor Hagel, Regen, Sonnenbrand, Hitzestau und/oder vor Schädlingen sowie vor einem Weinessigfliegenschwarm. Ferner sind die kultivierten Waldfrüchte von kultivierten Himbeeren und/oder Brombeeren ausgebildet. Die Schutzvorrichtung 38b schützt die Reihenanordnungen 40b von kultivierten Himbeeren und/oder Brombeeren. Besonders vorteilhaft könnte die Schutzvorrichtung 38b auch zum Schutz von Weinreben und Weintrauben eingesetzt werden, insbesondere indem diese mehrere Reihenanordnungen überdeckt.

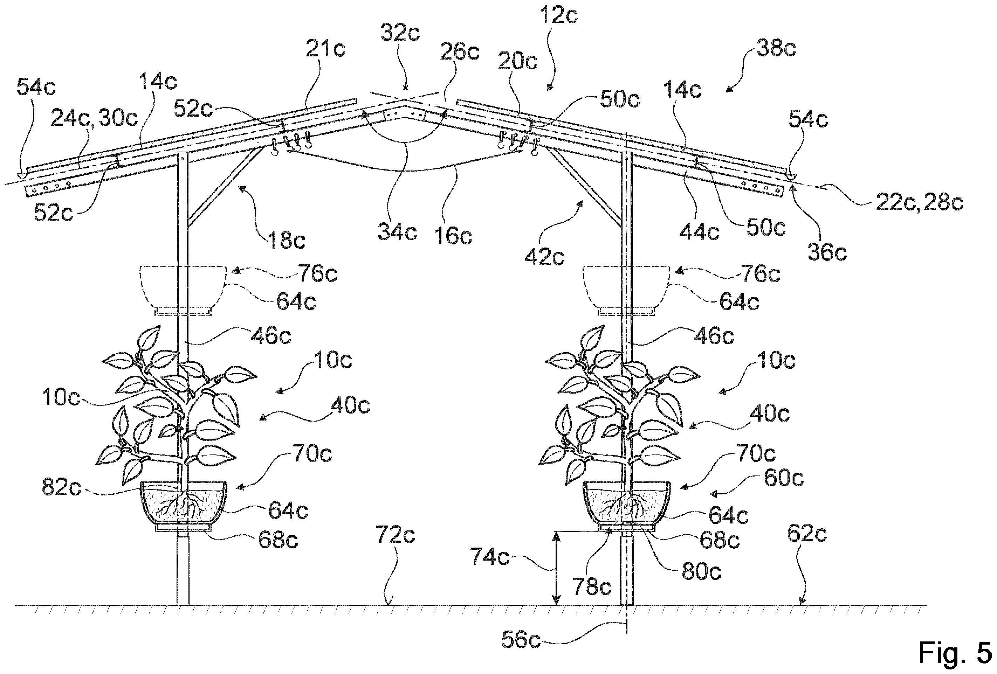

In Figur 5 ist eine weitere alternative Ausgestaltung einer Schutzvorrichtung 38c in einer Schnittansicht gezeigt. Die Schutzvorrichtung 38c ist insbesondere als eine Pflanzenschutzvorrichtung ausgebildet. Die Schutzvorrichtung 38c ist insbesondere als Teil eines Schutzvorrichtungssystems ausgebildet. Die Schutzvorrichtung 38c ist zu einem Schutz von Kulturpflanzen 10c vorgesehen. Die Schutzvorrichtung 38c umfasst eine Schutzeinheit 12c, die eine Mehrzahl von Schutzelementen 14c zu einem Schutz der Kulturpflanzen vor Witterungsbedingungen und/oder einem Schädlingsbefall aufweist. Die Schutzelemente 14c sind parallel zu einer Längsachse 32c der Schutzvorrichtung 38c in zwei Reihen angeordnet. Die Schutzvorrichtung 38c umfasst eine Trägerstruktur 18c zu einer Abstützung der Schutzelemente 14c. Die Schutzelemente 14c sind jeweils zumindest teilweise als ein Solarelement zu einer Energieumwandlung ausgebildet. Die in der Figur 5 dargestellte Schutzvorrichtung 38c weist eine zumindest im Wesentlichen analoge Ausgestaltung zu der in der Beschreibung der Figuren 1 bis 3 beschriebenen Schutzvorrichtung 38, 38a auf, so dass bezüglich einer Ausgestaltung der in der Figur 5 dargestellten Schutzvorrichtung 38c zumindest im Wesentlichen auf die Beschreibung der Figuren 1 bis 3 verwiesen werden kann. Im Unterschied zu der in der Beschreibung der Figuren 1 bis 3 beschriebenen Schutzvorrichtung 38, 38a umfasst die in der Figur 5 gezeigte Schutzvorrichtung 38c vorzugsweise eine Bepflanzungseinheit 60c, die an der Trägerstruktur 18c angeordnet ist und dazu vorgesehen ist, die Kulturpflanzen 10c beabstandet von einem Untergrund 62c anzuordnen. Vorzugsweise ist die Bepflanzungseinheit 60c zumindest größtenteils, insbesondere zumindest im Wesentlichen vollständig, zwischen dem Untergrund 62c und der Schutzeinheit 12c, insbesondere Schutzelementen 14c, 16c der Schutzeinheit 12c, angeordnet. Bevorzugt ist die Bepflanzungseinheit 60c über eine Schraubverbindung an der Trägerstruktur 18c, insbesondere Stützelementen 46c der Trägerstruktur 18c, befestigt. Bevorzugt erstreckt sich die Bepflanzungseinheit 60c zumindest größtenteils, insbesondere zumindest im Wesentlichen vollständig, über eine maximale Längserstreckung 66 der Trägerstruktur 18c und/oder der Schutzeinheit 12c (siehe Figur 1). Insbesondere ist die Bepflanzungseinheit 60c dazu vorgesehen, Pflanzenerde zu einer Kultivierung der Kulturpflanzen 10c zu halten. Vorzugsweise ist die Bepflanzungseinheit 60c dazu vorgesehen, eine Vielzahl von Kulturpflanzen 10c, die zu deren Kultivierung vorgesehene Pflanzenerde sowie zu deren Kultivierung verwendetes Wasser beabstandet vom Untergrund 62c anzuordnen. Der Untergrund 62c weist vorzugsweise eine Aufständerfläche 72c auf, über die die Schutzvorrichtung 38c auf dem Untergrund 62c angeordnet ist. Insbesondere ist die Schutzvorrichtung 38c über die Trägerstruktur 18c, insbesondere die Stützelemente 46c, an dem Untergrund 62c angeordnet, insbesondere auf dem Untergrund 62c aufgestellt. Besonders bevorzugt ist die Trägerstruktur 18c, insbesondere die Stützelemente 64c der Trägerstruktur 18c, an denen die Bepflanzungseinheit 60c angeordnet ist, dazu vorgesehen, ein gesamtes Gewicht der Bepflanzungseinheit 60c, der über die Bepflanzungseinheit 60c gehaltenen Kulturpflanzen 10c, von zu der Kultivierung der Kulturpflanzen 10c vorgesehener Pflanzenerde und/oder von zu der Kultivierung der Kulturpflanzen 10c verwendetem Wasser zu tragen und/oder abzustützen. Die Bepflanzungseinheit 60c umfasst zumindest zwei Bepflanzungselemente 64c, die jeweils beabstandet von dem Untergrund 62c angeordnet sind und sich jeweils zumindest im Wesentlichen parallel zu einer Längserstreckung 66 der Trägerstruktur 18c und/oder der Schutzeinheit 12c über einen Abstand 84 von zumindest zwei, insbesondere drei, hintereinander angeordneten Stützelementen 46c der Trägerstruktur 18c erstrecken (vgl. Figur 1). Insbesondere erstrecken sich die Bepflanzungselemente 64c zumindest größtenteils über eine maximale Längserstreckung 66 der Trägerstruktur 18c und der Schutzeinheit 12c (vgl. Figur 1). Die Bepflanzungselemente 64c sind insbesondere jeweils als Pflanzkasten ausgebildet. Bevorzugt sind die Bepflanzungselemente 64c zu einer Aufnahme der in Reihenanordnung angeordneten Kulturpflanzen 10c vorgesehen, wobei die in den Bepflanzungselementen 64c angeordneten Kulturpflanzen 10c insbesondere beabstandet von dem Untergrund 62c angeordnet sind. Insbesondere sind die Bepflanzungselemente 64c an der Trägerstruktur 18c, insbesondere den Stützelementen 46c der Trägerstruktur 18c, angeordnet, insbesondere befestigt, und beabstandet vom Untergrund 62c angeordnet. Die Bepflanzungselemente 64c sind jeweils rinnenförmig ausgebildet. Bevorzugt ist die Bepflanzungseinheit 60c aus den zwei in zumindest im Wesentlichen parallel zueinander angeordneten Reihen 70c angeordneten Bepflanzungselementen 64c ausgebildet. Es sind auch andere Ausgestaltungen der Bepflanzungseinheit 60c denkbar, wobei insbesondere die Bepflanzungseinheit 60c aus durch mehr als ein Bepflanzungselement 64c gebildete Reihen 70c ausgebildet ist. Insbesondere ist denkbar, dass die einzelnen Reihen 70c, 76c der Bepflanzungseinheit 60c jeweils zumindest zwei oder mehr zueinander koaxial angeordnete Bepflanzungselemente 64c umfassen. Die Bepflanzungselemente 64c sind insbesondere jeweils zwischen zumindest zwei Stützelementen 46c der Trägerstruktur 18c angeordnet und vorzugsweise an den Stützelementen 46c befestigt. Bevorzugt umschließen die Bepflanzungselemente 64c die Stützelemente 46c in einer Horizontalen betrachtet zumindest im Wesentlichen vollständig, wobei insbesondere die Kulturpflanzen 10c entlang einer Haupterstreckungsachse der Bepflanzungselemente 64c zwischen den Stützelementen 46c angeordnet sind. Die Bepflanzungselemente 64c und/oder die Reihen 70c, 76c von Bepflanzungselementen 64c, insbesondere Haupterstreckungsachsen der Bepflanzungselemente 64c, sind vorzugsweise jeweils zumindest im Wesentlichen parallel zu einer Horizontalen, der Aufständerfläche 72c und dem Untergrund 62c angeordnet. Es ist aber auch denkbar, dass die Bepflanzungselemente 64c, beispielsweise bei einer Anordnung der Schutzvorrichtung 38c an einem Abhang zumindest im Wesentlichen parallel zu dem Untergrund 62c oder zu einer Horizontalen angeordnet sind. Die Bepflanzungselemente 64c und/oder die Reihen 70c, 76c von Bepflanzungselementen 64c weisen vorzugsweise einen einheitlichen minimalen Abstand 74c zum Untergrund 62c, insbesondere zur Aufständerfläche 72c, auf. Vorzugsweise beträgt der minimale Abstand 74c der Bepflanzungselemente 64c zum Untergrund 62c, insbesondere zur Aufständerfläche 72c, mindestens 5 cm, vorzugsweise mindestens 10 cm und bevorzugt mindestens 15 cm. Es ist denkbar, dass die Bepflanzungseinheit 60c mehr als eine Ebene von Bepflanzungselementen 64c umfasst, wobei insbesondere an den Stützelementen 46c der Trägerstruktur 18c jeweils zwei oder mehr Bepflanzungselemente 64c angeordnet, insbesondere befestigt, sind, die vorzugsweise übereinander zwischen dem Untergrund 62c und der Schutzeinheit 12c, insbesondere den Schutzelementen 14c, 16c der Schutzeinheit 12c, angeordnet sind (in Figur 5 angedeutet). Insbesondere weisen die übereinander angeordneten Bepflanzungselemente 64c jeweils einen unterschiedlichen minimalen Abstand zum Untergrund 62c, insbesondere zur Aufständerfläche 72c, auf. Vorzugsweise erstrecken sich die übereinander angeordneten Bepflanzungselemente 64c zumindest im Wesentlichen parallel zueinander und bevorzugt zumindest im Wesentlichen parallel zu einer Horizontalen, der Aufständerfläche 72c und/oder dem Untergrund 62c. Bevorzugt weisen die Bepflanzungselemente 64c in einer senkrecht zu deren Haupterstreckungsachse angeordneten Querschnittsfläche betrachtet eine runde Grundform auf, die insbesondere in eine vom Untergrund 62c abgewandte Richtung zumindest teilweise offen ausgebildet ist. Es sind jedoch auch andere, insbesondere eckige, Ausgestaltungen der Bepflanzungselemente 64c denkbar. Vorzugsweise sind die Bepflanzungselemente 64c aus einem, insbesondere witterungsbeständigen und/oder wetterfesten, Kunststoff ausgebildet.

Die Bepflanzungseinheit 60c umfasst eine Mehrzahl von Kanalelementen 68c, die dazu vorgesehen sind, Abwasser zu sammeln und gerichtet, insbesondere jeweils zumindest im Wesentlichen parallel zu einer Haupterstreckungsachse der Bepflanzungseinheit 60c und/oder eines der Bepflanzungselemente 64c, abzuleiten. Die Kanalelemente 68c sind jeweils an einem Bepflanzungselement 64c der Bepflanzungseinheit 60c angeordnet. Die Kanalelemente 68c sind jeweils einteilig mit einem der Bepflanzungselemente 64c ausgebildet. Es ist jedoch auch denkbar, dass die Kanalelemente 68c getrennt von den Bepflanzungselementen 64c ausgebildet sind und insbesondere an den Bepflanzungselementen 64c befestigt sind oder dass die Kanalelemente 68c beabstandet von den Bepflanzungselementen 64c angeordnet sind und beispielsweise einzeln an den Stützelementen 46c befestigt sind. Die Kanalelemente 68c sind jeweils an einer Unterseite 78c, insbesondere an einem Boden, eines Bepflanzungselements 64c angeordnet. Insbesondere ist die Unterseite 78c der Bepflanzungselemente 64c jeweils als eine dem Untergrund 62c zugewandte Seite der Bepflanzungselemente 64c ausgebildet. Vorzugsweise sind die Kanalelemente 68c über die Bepflanzungselemente 64c an der Trägerstruktur 18c, insbesondere einem Stützelement 46c der Trägerstruktur 18c, angeordnet, insbesondere befestigt. Es ist aber auch denkbar, dass die Kanalelemente 68c jeweils zumindest ein Befestigungsmittel zu einem Befestigen des Kanalelements 68c und/oder des Bepflanzungselements 64c an der Trägerstruktur 18c, insbesondere einem der Stützelemente 46c, aufweisen. Bevorzugt ist an jedem Bepflanzungselement 46c der Bepflanzungseinheit 60c zumindest ein, insbesondere genau ein, Kanalelement 68c angeordnet, welche(s) sich zumindest im Wesentlichen vollständig über eine Haupterstreckung des Bepflanzungselements 64c erstreckt/erstrecken. Bevorzugt begrenzen die Bepflanzungselemente 64c der Bepflanzungseinheit 60c jeweils an einer Unterseite 78c, insbesondere in Richtung des Untergrunds 62c, eine Vielzahl von Durchführungen 80c zu einem Ablauf eines Fluids, insbesondere von Abwasser. Die Durchführungen 80c sind jeweils entlang einer Haupterstreckungsachse der Bepflanzungselemente 64c, insbesondere zumindest im Wesentlichen gleichmäßig, verteilt angeordnet. Vorzugsweise sind die Kanalelemente 68c derart angeordnet, dass ein durch die zumindest eine Durchführung 80c ablaufendes Fluid/Abwasser über zumindest eines der Kanalelemente 68c aufgefangen, gesammelt und/oder abgeleitet wird.

Die Kanalelemente 68c sind aus einem, insbesondere witterungsbeständigen und/oder wetterfesten, Kunststoff ausgebildet. Es sind aber auch andere Ausgestaltungen der Kanalelemente 68c denkbar, beispielsweise aus einem Blech. Es ist denkbar, dass die Bepflanzungseinheit 60c zumindest ein Filter- und/oder Wiederaufbereitungssystem zu einem Filtern und/oder einem Wiederaufbereiten des Abwassers umfasst (in den Figuren nicht gezeigt), wobei insbesondere die Bepflanzungseinheit 60c dazu vorgesehen ist, das gefilterte und/oder wiederaufbereitete Abwasser zu einer Bewässerung der Kulturpflanzen 10c wiederzuverwenden. Die Kanalelemente 68c sind zumindest im Wesentlichen parallel zu den Bepflanzungselementen 64c, zu einer Horizontalen, zu der Aufständerfläche 72c und/oder zu dem Untergrund 62c angeordnet. Alternativ ist denkbar, dass die Kanalelemente 68c jeweils relativ zu einer Horizontalen, der Aufständerfläche 72c und/oder dem Untergrund 62c geneigt angeordnet sind und insbesondere dazu vorgesehen sind, das Abwasser über die Schwerkraft abzuleiten. Die Kanalelemente 68c sind jeweils rinnenförmig ausgebildet und weisen jeweils senkrecht zu einer Haupterstreckungsachse des Kanalelements 68c eine eckige Querschnittsfläche auf. Es sind aber auch runde Ausgestaltungen der Kanalelemente 68c denkbar. Die Kanalelemente 68c begrenzen jeweils eine Ausnehmung, die sich zumindest im Wesentlichen parallel zur Haupterstreckungsachse des jeweiligen Kanalelements 68c und/oder eines der Bepflanzungselemente 64c erstreckt und dazu vorgesehen ist, das Fluid/Abwasser zu leiten. Insbesondere sind die Ausnehmungen jeweils zumindest fluidtechnisch mit durch ein an der Ausnehmung angeordnetes Bepflanzungselement 64c der Bepflanzungselemente 64c begrenzten Durchführungen 80c verbunden. Bevorzugt begrenzt ein Boden der Bepflanzungselemente 64c jeweils eine über ein Kanalelement 68c der Bepflanzungseinheit 60c begrenzte Ausnehmung zumindest teilweise. In einer Ausgestaltung der Bepflanzungseinheit 60c, in der die Bepflanzungseinheit 60c mehrere übereinander angeordnete Reihen 70c, 76c von Bepflanzungselementen 64c und Kanalelementen 68c umfasst, ist denkbar, dass übereinander angeordnete Kanalelemente 68c (in Figur 5 nur für eine untere Reihe 70c gezeigt) fluidtechnisch verbunden sind, um Fluid/Abwasser von übereinander angeordneten Reihen 70c, 76c zu sammeln und gemeinsam abzuleiten und/oder zu filtern.

Die Bepflanzungselemente 64c begrenzen eine Mehrzahl an weiteren Durchführungen 82c, welche sich vollständig über eine maximale Höhe der Bepflanzungselemente 64c erstrecken und welche zur Aufnahme eines Stützelements 46c der Trägerstruktur 18c vorgesehen sind. Bevorzugt bilden die Bepflanzungselemente 64c jeweils innerhalb eines zur Aufnahme der Kulturpflanzen 10c und von Pflanzenerde vorgesehenen begrenzten Volumens zumindest eine Wandung aus, welche das von dem jeweiligen Bepflanzungselement 64c begrenzte Volumen von einer der weiteren Durchführungen 82c trennt. Bevorzugt erstrecken sich die weiteren Durchführungen 82c jeweils durch ein an dem jeweiligen Bepflanzungselement 64c angeordnetes Kanalelement 68c. Vorzugsweise bilden die Kanalelemente 68c jeweils für jede weitere Durchführung 82c, welche das jeweilige Kanalelement 68c durchdringt, zumindest eine Wandung aus, welche jeweils eine durch das Kanalelement 68c begrenzte Ausnehmung zur Leitung des Fluids/Abwassers von einer der weiteren Durchführungen 82c trennt.

### Bezugszeichen

- 10: Kulturpflanze
- 12: Schutzeinheit
- 14: Schutzelement
- 16: Schutzelement
- 18: Trägerstruktur
- 20: Solarelement
- 21: Solarelement
- 22: Abstützebene
- 24: Abstützebene
- 26: Luftzirkulationsöffnung
- 27: Luftzirkulationsöffnung
- 28: Querachse
- 30: Querachse
- 32: Längsachse
- 34: Kippwinkel
- 36: Regenwassersammeleinheit
- 38: Schutzvorrichtung
- 40: Reihenanordnung
- 42: Stützstruktur
- 44: Sparrenelement
- 46: Stützelement
- 50: Trägerelement
- 52: Trägerelement
- 54: Rinnenelement
- 56: Hochachse
- 58: Verwindungselement
- 60: Bepflanzungseinheit
- 62: Untergrund
- 64: Bepflanzungselement
- 66: Längserstreckung
- 68: Kanalelement
- 70: Reihe
- 72: Aufständerfläche
- 74: Abstand
- 76: Reihe
- 78: Unterseite
- 80: Durchführung
- 82: Durchführung
- 84: Abstand

## Patentansprüche

1. Schutzvorrichtung, insbesondere Pflanzenschutzvorrichtung, zu einem Schutz von zumindest einer Kulturpflanze (10, 10a; 10b; 10c), mit einer Schutzeinheit (12, 12a; 12b; 12c), die zumindest ein Schutzelement (14, 16, 14a, 16a; 14b, 16b; 14c, 16c) zu einem Schutz der zumindest einen Kulturpflanze (10, 10a; 10b; 10c) vor zumindest einer Witterungsbedingung und/oder einem Schädlingsbefall aufweist, und mit einer Trägerstruktur (18, 18a; 18b; 18c) zu einer Abstützung des zumindest einen Schutzelements (14, 16, 14a, 16a; 14b, 16b; 14c, 16c), wobei das zumindest eine Schutzelement (14, 14a; 14b; 14c) zumindest teilweise als ein Solarelement (20, 20a, 21, 21a; 20b, 21b; 20c, 21c) zu einer Energieumwandlung ausgebildet ist, wobei die Trägerstruktur (18, 18a; 18b; 18c) zumindest zwei Abstützebenen (22, 24; 22b, 24b; 22c, 24c) aufweist, die zueinander verkippt angeordnet sind und jeweils zu einer Abstützung von zumindest einem Solarelement (20, 20a, 21, 21a; 20b, 21b; 20c, 21c) vorgesehen sind, wobei die zumindest zwei als Solarelement (20, 20a, 21, 21a; 20b, 21b; 20c, 21c) ausgebildeten Schutzelemente (14, 16, 14a, 16a; 14b, 16b; 14c, 16c) jeweils auf den zueinander verkippten Abstützebenen (22, 24; 22b, 24b; 22c, 24c) angeordnet sind, **dadurch gekennzeichnet, dass** die zumindest zwei Solarelemente (20, 20a, 21, 21a; 20b, 21b; 20c, 21c) eine Luftzirkulationsöffnung (26, 27; 26b; 26c) begrenzen, die von einer Lücke zwischen den zumindest zwei Solarelementen (20, 20a, 21, 21a; 20b, 21b; 20c, 21c) entlang einer Achse senkrecht zu einer Hochachse (56) gebildet ist, wobei an der Luftzirkulationsöffnung (26, 27; 26b; 26c) zumindest ein weiteres Schutzelement (16; 16b; 16c) angeordnet ist.

2. Schutzvorrichtung nach Anspruch 1, **dadurch gekennzeichnet, dass** das zumindest eine weitere Schutzelement (16; 16b; 16c) in einem Funktionszustand eine Verbindung mit der Trägerstruktur (18, 18a; 18b; 18c) aufweist.

3. Schutzvorrichtung nach einem der vorhergehenden Ansprüche, **dadurch gekennzeichnet, dass** das zumindest eine weitere Schutzelement (16; 16b; 16c) als ein Netz ausgebildet ist.

4. Schutzvorrichtung nach Anspruch 1, **dadurch gekennzeichnet, dass** die zumindest zwei Abstützebenen (22, 24; 22b, 24b; 22c, 24c) dazu vorgesehen sind, jeweils zumindest zwei Solarelemente (20, 20a, 21, 21a; 20b, 21b; 20c, 21c) zumindest im Wesentlichen parallel zu einer Querachse (28, 30; 28b, 30b; 28c, 30c) und/oder jeweils zumindest zwei Solarelemente (20, 20a, 21, 21a; 20b, 21b; 20c, 21c) zumindest im Wesentlichen parallel zu einer Längsachse (32; 32b; 32c) der jeweiligen Abstützebene (22, 24; 22b, 24b; 22c, 24c) benachbart aufzunehmen.

5. Schutzvorrichtung nach Anspruch 4, **gekennzeichnet durch** zumindest acht Solarelemente (20, 20a, 21, 21a; 20b, 21b; 20c, 21c).

6. Schutzvorrichtung nach Anspruch 1, **dadurch gekennzeichnet, dass** die Trägerstruktur (18, 18a; 18b; 18c) in einem montierten Zustand eine maximale Höhe von 4,5 m aufweist.

7. Schutzvorrichtung nach Anspruch 1, **dadurch gekennzeichnet, dass** die Trägerstruktur (18, 18a; 18b; 18c) eine Stützbreite von minimal 1,4 m bis maximal 9 m aufweist.

8. Schutzvorrichtung nach Anspruch 1, **dadurch gekennzeichnet, dass** die Abstützebenen (22, 24; 22b, 24b; 22c, 24c) in einem montierten Zustand der Trägerstruktur (18, 18a; 18b; 18c) einen relativen Kippwinkel (34, 34b; 34c) zueinander in einem Wertebereich von 144 ° bis 164 ° aufweisen.

9. Schutzvorrichtung nach einem der vorhergehenden Ansprüche, **gekennzeichnet durch** eine Regenwassersammeleinheit (36; 36c).

10. Schutzvorrichtung nach einem der vorhergehenden Ansprüche, **gekennzeichnet durch** zumindest eine Bepflanzungseinheit (60c), die dazu vorgesehen ist, die zumindest eine Kulturpflanze (10c) beabstandet von einem Untergrund (62c) anzuordnen und die insbesondere an der Trägerstruktur (18c) angeordnet ist.

11. Schutzvorrichtung nach Anspruch 10, **dadurch gekennzeichnet, dass** die Bepflanzungseinheit (60c) zumindest ein Bepflanzungselement (64c), insbesondere einen Pflanzkasten, zur Aufnahme der zumindest einen Kulturpflanze (10c) umfasst, das beabstandet von dem Untergrund (62c) angeordnet ist.

12. Schutzvorrichtung nach Anspruch 11, **dadurch gekennzeichnet, dass** sich das zumindest eine Bepflanzungselement (64c) zumindest im Wesentlichen parallel zu einer Längserstreckung (66) der Trägerstruktur (18c) und/oder der Schutzeinheit (12c) über einen Abstand (84) von zumindest zwei, insbesondere drei, hintereinander angeordneten Stützelementen (46c) der Trägerstruktur (18c) erstreckt.

13. Schutzvorrichtung nach einem der Ansprüche 10 bis 12, **dadurch gekennzeichnet, dass** die Bepflanzungseinheit (60c) zumindest ein Kanalelement (68c) umfasst, das dazu vorgesehen ist, Abwasser zu sammeln und gerichtet, insbesondere zumindest im Wesentlichen parallel zu einer Haupterstreckungsachse der Bepflanzungseinheit (60c), abzuleiten.

14. Schutzvorrichtungssystem mit zumindest zwei Schutzvorrichtungen (38, 38a; 38c) nach einem der vorhergehenden Ansprüche, **dadurch gekennzeichnet, dass** die beiden Schutzvorrichtungen (38, 38a; 38c) unterschiedliche Lichtdurchlässigkeiten zur Anpassung an geologisch und/oder botanisch bedingte Kenngrößen aufweisen.

15. Verfahren mit einer Schutzvorrichtung nach einem der Ansprüche 1 bis 13, **dadurch gekennzeichnet, dass** mit der Schutzvorrichtung (38, 38a; 38b; 38c) zumindest eine Reihenanordnung (40; 40b; 40c) von zumindest einer Kulturpflanze, insbesondere von kultiviertem Halbschattengemüse und/oder von kultivierten Waldfrüchten, geschützt wird.

16. Verfahren mit einer Schutzvorrichtung nach einem der Ansprüche 1 bis 13 oder Verfahren nach Anspruch 15, **dadurch gekennzeichnet, dass** zumindest eine Reihenanordnung (40; 40b; 40c) von zumindest einer Kulturpflanze (10, 10a; 10b; 10c), insbesondere von Weinreben, von kultiviertem Halbschattengemüse und/oder kultivierten Waldfrüchten, vor Hagel, Regen, Sonnenbrand, Hitzestau und/oder vor Schädlingen, insbesondere vor einem Weinessigfliegenschwarm, geschützt wird.

17. Verfahren mit einer Schutzvorrichtung nach einem der Ansprüche 1 bis 13 oder Verfahren nach einem der Ansprüche 15 oder 16, **dadurch gekennzeichnet, dass** zumindest eine Reihenanordnung (40; 40b; 40c) von kultivierten Waldfrüchten, insbesondere Himbeeren und/oder Brombeeren, geschützt wird.

18. Verfahren mit einer Schutzvorrichtung nach einem der Ansprüche 1 bis 12 oder Verfahren nach einem der Ansprüche 15 bis 17, **dadurch gekennzeichnet, dass** eine Lichtdurchlässigkeit der Schutzvorrichtung (38, 38a; 38b; 38c) an zumindest eine geologisch und/oder botanisch bedingte Kenngröße angepasst wird.

## Claims

1. Protection device, in particular plant protection device, for protecting at least one cultivated plant (10, 10a; 10b; 10c),
with a protection unit (12, 12a; 12b; 12c) comprising at least one protective element (14, 16, 14a, 16a; 14b, 16b; 14c, 16c) for protecting the at least one cultivated plant (10, 10a; 10b; 10c) from at least one weather condition and/or from a pest infestation,
and with a support structure (18, 18a; 18b; 18c) for supporting the at least one protective element (14, 16, 14a, 16a; 14b, 16b; 14c, 16c),
wherein the at least one protective element (14, 14a; 14b; 14c) is at least partially designed as a solar element (20, 20a, 21, 21a; 20b, 21b; 20c, 21c) for energy conversion,
wherein the support structure (18, 18a; 18b; 18c) comprises at least two support planes (22, 24; 22b, 24b; 22c, 24c) which are arranged tilted relative to one another and are each configured for supporting at least one solar element (20, 20a, 21, 21a; 20b, 21b; 20c, 21c),
wherein the at least two protective elements (14, 16, 14a, 16a; 14b, 16b; 14c, 16c) designed as solar elements (20, 20a, 21, 21a; 20b, 21b; 20c, 21c) are in each case arranged on the support planes (22, 24; 22b, 24b; 22c, 24c) which are tilted relative to one another,
**characterized in that** the at least two solar elements (20, 20a, 21, 21a; 20b, 21b; 20c, 21c) delimit an air-circulation opening (26, 27; 26b; 26c) which is formed by a gap between the at least two solar elements (20, 20a, 21, 21a; 20b, 21b; 20c, 21c) along an axis perpendicular to a vertical axis (56),
wherein at least one further protective element (16; 16b; 16c) is arranged at the air-circulation opening (26, 27; 26b; 26c).

2. Protection device according to claim 1,
**characterized in that** the at least one further protective element (16; 16b; 16c) has in a functional state a connection to the support structure (18, 18a; 18b; 18c).

3. Protection device according to one of the preceding claims,
**characterized in that** the at least one further protective element (16; 16b; 16c) is embodied as a net.

4. Protection device according to claim 1,
**characterized in that** the at least two support planes (22, 24; 22b, 24b; 22c, 24c) are in each case configured to receive at least two solar elements (20, 20a, 21, 21a; 20b, 21b; 20c, 21c) such that they are adjacent to one another at least substantially parallel to a transverse axis (28, 30; 28b, 30b; 28c, 30c), and/or to receive at least two solar elements (20, 20a, 21, 21a; 20b, 21b; 20c, 21c) such that they are adjacent to one another at least substantially parallel to a longitudinal axis (32; 32b; 32c) of the respective support plane (22, 24; 22b, 24b; 22c, 24c).

5. Protection device according to claim 4,
**characterized by** at least eight solar elements (20, 20a, 21, 21a; 20b, 21b; 20c, 21c).

6. Protection device according to claim 1,
**characterized in that** the support structure (18, 18a; 18b; 18c) has in a mounted state a maximum height of 4.5 m.

7. Protection device according to claim 1,
**characterized in that** the support structure (18, 18a; 18b; 18c) has a support width of at least 1.4 m to at most 9 m.

8. Protection device according to claim 1,
**characterized in that** the support planes (22, 24; 22b, 24b; 22c, 24c) have in a mounted state of the support structure (18, 18a; 18b; 18c) a relative tilt angle (34, 34b; 34c) relative to each other in a value range of 144° to 164°.

9. Protection device according to one of the preceding claims, **characterized by** a rainwater collection unit (36; 36c).

10. Protection device according to one of the preceding claims,
**characterized by** at least one planting unit (60c) which is configured to arrange the at least one cultivated plant (10c) at a distance from a ground (62c), and which is in particular arranged at the support structure (18c).

11. Protection device according to claim 10,
**characterized in that** the planting unit (60c) comprises at least one planting element (64c), in particular a planting box, for receiving the at least one cultivated plant (10c), said planting element (64c) being arranged at a distance from the ground (62c).

12. Protection device according to claim 11,
**characterized in that** the at least one planting element (64c) extends at least substantially parallel to a longitudinal extent (66) of the support structure (18c) and/or of the protection unit (12c) over a distance (84) of at least two, in particular three, support elements (46c) of the support structure (18c) which are arranged one behind the other.

13. Protection device according to one of claims 10 to 12,
**characterized in that** the planting unit (60c) comprises at least one channel element (68c), which is configured to collect waste water and to discharge the waste water in a directed manner, in particular at least substantially parallel to a main extension axis of the planting unit (60c).

14. Protection device system with at least two protection devices (38, 38a; 38c) according to one of the preceding claims,
**characterized in that** the two protection devices (38, 38a; 38c) have different light permeabilities for an adaption to parameters in terms of geology and/or botany.

15. Method with a protection device according to one of claims 1 to 13, **characterized in that** at least one row arrangement (40; 40b; 40c) of at least one cultivated plant, in particular cultivated half-shade vegetables and/or cultivated forest fruits, is protected by means of the protection device (38, 38a; 38b; 38c).

16. Method with a protection device according to one of claims 1 to 13 or method according to claim 15,
**characterized in that** at least one row arrangement (40; 40b; 40c) of at least one cultivated plant (10, 10a; 10b; 10c), in particular grape vines, cultivated half-shade vegetables and/or cultivated forest fruits, is protected from hail, rain, sunburn, heat accumulation and/or from pests, in particular from a swarm of vinegar flies.

17. Method with a protection device according to one of claims 1 to 13 or method according to one of claims 15 or 16,
**characterized in that** at least one row arrangement (40; 40b; 40c) of cultivated forest fruits, in particular raspberries and/or blackberries, is protected.

18. Method with a protection device according to one of claims 1 to 12 or method according to one of claims 15 to 17,
**characterized in that** a light permeability of the protection device (38, 38a; 38b; 38c) is adapted to at least one parameter in terms of geology and/or botany.

## Revendications

1. Dispositif de protection, en particulier dispositif de protection de plantes, pour la protection d'au moins une plante cultivée (10, 10a ; 10b ; 10c), avec une unité de protection (12, 12a ; 12b ; 12c) comprenant au moins un élément protectif (14, 16, 14a, 16a ; 14b, 16b ; 14c, 16c) pour la protection de l'au moins une plante cultivée (10, 10a ; 10b ; 10c) contre au moins une condition météorologique et/ou contre une infestation par des organismes nuisibles,
et avec une structure de support (18, 18a ; 18b ; 18c) pour supporter l'au moins un élément protectif (14, 16, 14a, 16a ; 14b, 16b ; 14c, 16c),
où l'au moins un élément protectif (14, 14a ; 14b ; 14c) est réalisé au moins en partie comme élément solaire (20, 20a, 21, 21a ; 20b, 21b ; 20c, 21c) pour une conversion d'énergie,
où la structure de support (18, 18a ; 18b ; 18c) comprend au moins deux plans de support (22, 24 ; 22b, 24b ; 22c, 24c) disposés de manière inclinée l'un par rapport à l'autre et prévus respectivement pour le support d'au moins un élément solaire (20, 20a, 21, 21a ; 20b, 21b ; 20c, 21c),
où les au moins deux éléments protectifs (14, 16, 14a, 16a ; 14b, 16b ; 14c, 16c) réalisés comme éléments solaires (20, 20a, 21, 21a ; 20b, 21b ; 20c, 21c) sont disposés respectivement sur les plans de support (22, 24 ; 22b, 24b ; 22c, 24c) inclinés l'un par rapport à l'autre,
**caractérisé en ce que** les au moins deux éléments solaires (20, 20a, 21, 21a ; 20b, 21b ; 20c, 21c) délimitent une aperture de circulation d'air (26, 27 ; 26b ; 26c) formée par un espace entre les au moins deux éléments solaires (20, 20a, 21, 21a ; 20b, 21b ; 20c, 21c) le long d'un axe perpendiculaire à un axe vertical (56),
où au moins un autre élément protectif (16 ; 16b ; 16c) est disposé chez l'aperture de circulation d'air (26, 27 ; 26b ; 26c).

2. Dispositif de protection selon la revendication 1,
**caractérisé en ce que** l'au moins un autre élément protectif (16 ; 16b ; 16c) comporte en état fonctionnel une liaison avec la structure de support (18, 18a ; 18b ; 18c).

3. Dispositif de protection selon l'une des revendications précédentes, **caractérisé en ce que** l'au moins un autre élément protectif (16 ; 16b ; 16c) est réalisé comme un filet.

4. Dispositif de protection selon la revendication 1,
**caractérisé en ce que** les au moins deux plans de support (22, 24 ; 22b, 24b ; 22c, 24c) sont conçus pour recevoir respectivement au moins deux éléments solaires (20, 20a, 21, 21a ; 20b, 21b ; 20c, 21c) de telle manière qu'ils sont adjacents au moins sensiblement parallèlement à un axe transversal (28, 30 ; 28b, 30b ; 28c, 30c) et/ou pour recevoir respectivement au moins deux éléments solaires (20, 20a, 21, 21a ; 20b, 21b ; 20c, 21c) de telle manière qu'ils sont adjacents au moins sensiblement parallèlement à un axe longitudinal (32 ; 32b ; 32c) du plan de support respectif (22, 24 ; 22b, 24b ; 22c, 24c).

5. Dispositif de protection selon la revendication 4,
**caractérisé par** au moins huit éléments solaires (20, 20a, 21, 21a ; 20b, 21b ; 20c, 21c).

6. Dispositif de protection selon la revendication 1,
**caractérisé en ce que** la structure de support (18, 18a ; 18b ; 18c) présente en état monté une hauteur maximale de 4,5 m.

7. Dispositif de protection selon la revendication 1,
**caractérisé en ce que** la structure de support (18, 18a ; 18b ; 18c) présente une largeur de support d'au moins 1,4 m à au plus 9 m.

8. Dispositif de protection selon la revendication 1,
**caractérisé en ce que** les plans de support (22, 24 ; 22b, 24b ; 22c, 24c) présentent en état monté de la structure de support (18, 18a ; 18b ; 18c) un angle d'inclinaison relatif (34, 34b ; 34c) l'un par rapport à l'autre dans une plage de valeurs de 144° à 164°.

9. Dispositif de protection selon l'une des revendications précédentes, **caractérisé par** une unité collectrice d'eau de pluie (36 ; 36c).

10. Dispositif de protection selon l'une des revendications précédentes, **caractérisé par** au moins une unité de plantation (60c) conçue pour disposer l'au moins une plante cultivée (10c) à distance d'un sol (62c) et qui est en particulier disposée sur la structure de support (18c).

11. Dispositif de protection selon la revendication 10,
**caractérisé en ce que** l'unité de plantation (60c) comprend au moins un élément de plantation (64c), en particulier une boîte à plantes, pour recevoir l'au moins une plante cultivée (10c), ledit élément de plantation (64c) étant disposé à distance du sol (62c).

12. Dispositif de protection selon la revendication 11,
**caractérisé en ce que** l'au moins un élément de plantation (64c) s'étend au moins sensiblement parallèlement à une étendue longitudinale (66) de la structure de support (18c) et/ou de l'unité de protection (12c) à travers une distance (84) d'au moins deux, en particulier trois, éléments de support (46c) de la structure de support (18c) disposés l'un derrière l'autre.

13. Dispositif de protection selon l'une des revendications 10 à 12, **caractérisé en ce que** l'unité de plantation (60c) comprend au moins un élément de conduit (68c) conçu pour collecter des eaux usées et pour évacuer les eaux usées de manière dirigée, en particulier au moins sensiblement parallèlement à un axe d'étendue principale de l'unité de plantation (60c).

14. Système à dispositif de protection avec au moins deux dispositifs de protection (38, 38a ; 38c) selon l'une des revendications précédentes, **caractérisé en ce que** les deux dispositifs de protection (38, 38a ; 38c) ont des perméabilités à la lumière différentes pour l'adaptation à des paramètres en termes géologiques et/ou botaniques.

15. Procédé avec un dispositif de protection selon l'une des revendications 1 à 13,
**caractérisé en ce qu'**au moins un agencement en rangées (40 ; 40b ; 40c) d'au moins une plante cultivée, en particulier de légumes à demi-ombre cultivés et/ou de fruits forestiers cultivés, est protégé par le dispositif de protection (38, 38a ; 38b ; 38c).

16. Procédé avec un dispositif de protection selon l'une des revendications 1 à 13 ou procédé selon la revendication 15,
**caractérisé en ce qu'**au moins un agencement en rangées (40 ; 40b ; 40c) d'au moins une plante cultivée (10, 10a ; 10b ; 10c), en particulier de vignes, de légumes à demi-ombre cultivés et/ou de fruits forestiers cultivés, est protégé de la grêle, de la pluie, des coups de soleil, de l'accumulation de chaleur et/ou de nuisibles, en particulier d'une nuée de mouches du vinaigre.

17. Procédé avec un dispositif de protection selon l'une des revendications 1 à 13 ou procédé selon l'une des revendications 15 ou 16,
**caractérisé en ce qu'**au moins un agencement en rangées (40 ; 40b ; 40c) de fruits forestiers cultivés, en particulier de framboises et/ou de mûrons, est protégé.

18. Procédé avec un dispositif de protection selon l'une des revendications 1 à 12 ou procédé selon l'une des revendications 15 à 17,
**caractérisé en ce qu'**une perméabilité à la lumière du dispositif de protection (38, 38a ; 38b ; 38c) est adaptée à au moins un paramètre en termes géologiques et/ou botaniques.
